# EUROPEAN PATENT APPLICATION

(11) **EP 4 561 206 A1**
(43) Date of publication of application: **28.05.2025**
(21) Application number: 23862453.0
(22) Date of filing: 07.09.2023
(51) Int. Cl.: H04W 64/00

(54) **SATELLITE POSITIONING METHOD AND RELATED PRODUCT**

(30) Priority: 09.09.2022 CN 202211105865
(71) Applicant: Huawei Technologies Co., Ltd., Shenzhen, Guangdong 518129 (CN)
(72) Inventor: MOU, Xin, Shenzhen, Guangdong 518129 (CN); ZHOU, Runze, Shenzhen, Guangdong 518129 (CN); WANG, Yuan, Shenzhen, Guangdong 518129 (CN)
(74) Representative: Pfenning, Meinig & Partner mbB
(86) International application number: PCT/CN2023/117359
(87) International publication number: WO 2024/051759

(57) **Abstract**

This application discloses a satellite positioning method and a related product. The method is applied to a satellite positioning scenario. The method includes: sending a first message to a first access network device that provides a service for a UE; responding to positioning measurement initiated by the first access network device, where the positioning measurement initiated by the first access network device is used to determine a first location of the UE; receiving a second message from the first access network device, where the second message indicates first satellite error correction information, and the first satellite error correction information indicates satellite error correction information that is of a location of the UE and that is obtained by the first access network device by using the first location; and determining a second location of the UE based on the first satellite error correction information, where precision of the second location is higher than precision of the first location. In this way, in a scenario (for example, an urban canyon) in which the UE cannot determine an approximate location of the UE or cannot accurately determine an approximate location of the UE based on a satellite signal, high-precision positioning of the UE can be implemented.

## Description

This application claims priority to Chinese Patent Application No. 202211105865.5, filed with the China National Intellectual Property Administration on September 9, 2022 and entitled "SATELLITE POSITIONING METHOD AND RELATED PRODUCT", which is incorporated herein by reference in its entirety.

### TECHNICAL FIELD

This application relates to the field of satellite positioning, and in particular, to a satellite positioning method and a related product.

### BACKGROUND

A basic principle of satellite positioning is to measure a distance between a satellite at a known location and a receiver of a user and then obtain a specific location of the receiver by combining data of a plurality of satellites. To achieve this purpose, the location of the satellite may be found in a satellite ephemeris based on time recorded by a satellite-borne clock. The distance between the user and the satellite is obtained by recording time it takes for a satellite signal to propagate to the user and then multiplying the time by the speed of light (due to interference from the ionosphere in the atmosphere, the distance is not a true distance between the user and the satellite, but a pseudorange). Positioning precision of the satellite depends on accuracy of a satellite observation quantity such as the pseudorange and a carrier phase, and the observation information is affected by a satellite ephemeris error, an atmospheric error, and a receiver error. Therefore, to obtain a high-precision positioning result, errors of the observation information need to be corrected.

A system supporting network real-time kinematic (real-time kinematic, RTK)-assisted satellite positioning implements high-precision positioning (centimeter level) by correcting the errors of the observation information. Network RTK includes a reference station network, a data processing center, and a data communication line. The reference station network collects the observation information in real time, that is, data obtained by a reference station by observing the satellite, and transmits the observation information to the data processing center through a data communication link. The data processing center determines, based on approximate coordinates of a mobile station, an area in which the mobile station is located, and then sends system error information (or referred to as error correction information) to the mobile station. The mobile station corrects the observation information based on the received system error information, to obtain accurate observation information. Currently, an existing solution of network-assisted satellite positioning has a problem that an error correction effect of the observation information is poor or even the positioning cannot be implemented in an environment like an urban canyon. The urban canyon is an urban environment similar to a natural canyon, and is a man-made canyon with streets dividing surrounding dense building blocks, especially skyscrapers. In the urban canyon environment, satellite signals are blocked due to high and dense buildings, and signal quality of observation information received by a terminal device deteriorates due to a multipath effect. Therefore, it is necessary to study a satellite positioning solution applicable to an environment like the urban canyon.

### SUMMARY

Embodiments of this application disclose a satellite positioning method and a related product, so that in a scenario in which a user equipment (user equipment, UE) cannot determine an approximate location of the user equipment or cannot accurately determine an approximate location of the user equipment based on a satellite signal, high-precision positioning of the UE can be implemented.

According to a first aspect, an embodiment of this application provides a satellite positioning method. The method is applied to a UE. The method includes: sending a first message to a first access network device that provides a service for the UE, where the first message is used to obtain satellite error correction information of a location of the UE; responding to positioning measurement initiated by the first access network device, where the positioning measurement initiated by the first access network device is used to determine a first location of the UE; receiving a second message from the first access network device, where the second message indicates first satellite error correction information, and the first satellite error correction information indicates the satellite error correction information that is of the location of the UE and that is obtained by the first access network device by using the first location; and determining a second location of the UE based on the first satellite error correction information, where precision of the second location is higher than precision of the first location.

In this embodiment of this application, the positioning measurement initiated by the first access network device is responded to, and the positioning measurement initiated by the first access network device is used to determine the first location of the UE. It can be learned that the first access network device determines an approximate location of the UE without relying on a satellite signal received by the UE. Therefore, in a scenario in which the UE cannot determine the approximate location of the UE or cannot accurately determine the approximate location of the UE based on the satellite signal, high-precision positioning of the UE can be implemented.

According to a second aspect, an embodiment of this application provides a satellite positioning method. The method is applied to a UE. The method includes: sending a first message to a first access network device that provides a service for the UE, where the first message is used to obtain a location that is of the UE and that is obtained by using a satellite observation quantity of the UE, and the first message includes the satellite observation quantity of the UE; responding to positioning measurement initiated by the first access network device, where the positioning measurement initiated by the first access network device is used to determine a first location of the UE; and receiving a second message from the first access network device, where the second message indicates a second location of the UE, precision of the second location is higher than precision of the first location, and the second location is obtained by the first access network device by using the satellite observation quantity of the UE and the first location.

In this embodiment of this application, the positioning measurement initiated by the first access network device is responded to, and the positioning measurement initiated by the first access network device is used to determine the first location of the UE. It can be learned that the first access network device determines an approximate location of the UE without relying on a satellite signal received by the UE. Therefore, in a scenario in which the UE cannot determine the approximate location of the UE or cannot accurately determine the approximate location of the UE based on the satellite signal, high-precision positioning of the UE can be implemented.

In a possible implementation of the first aspect or the second aspect, the responding to positioning measurement initiated by the first access network device includes: performing 5G single-station positioning measurement with the first access network device, where measurement information obtained by performing the 5G single-station positioning measurement with the first access network device is used to determine the first location.

In this implementation, the 5G single-station positioning measurement is performed with the first access network device, to quickly and accurately determine the approximate location of the UE.

According to a third aspect, an embodiment of this application provides another satellite positioning method. The method is applied to a first access network device. The method includes: receiving a first message from a UE, where the first message is used to obtain satellite error correction information of a location of the UE; obtaining a first location of the UE; determining, based on the first location of the UE, a plurality of second access network devices adjacent to the first access network device; obtaining first satellite error correction information based on a satellite observation quantity of the first access network device, satellite observation quantities of the plurality of second access network devices, and the first location, where the first satellite error correction information indicates the satellite error correction information of the location of the UE; and sending a second message to the UE, where the second message indicates the first satellite error correction information. Optionally, the obtaining a first location of the UE may be determining an approximate location of the UE, that is, the first location, without relying on a satellite signal received by the UE. In other words, the UE does not need to determine the probability location of the UE based on received satellite information.

In this embodiment of this application, the first location of the UE is obtained, and the first access network device determines the approximate location of the UE without relying on the satellite signal received by the UE. Therefore, in a scenario in which the UE cannot determine the approximate location of the UE or cannot accurately determine the approximate location of the UE based on the satellite signal, high-precision positioning of the UE can be implemented.

In a possible implementation of the third aspect, the obtaining first satellite error correction information based on a satellite observation quantity of the first access network device, satellite observation quantities of the plurality of second access network devices, and the first location includes: generating a satellite error correction model based on the satellite observation quantity of the first access network device and the satellite observation quantity of the plurality of second access network devices; and obtaining the first satellite error correction information based on the satellite error correction model and the first location.

In this implementation, the satellite error correction model can be accurately generated based on the satellite observation quantity of the first access network device and the satellite observation quantity of the plurality of second access network devices. Because the first location is accurate, the first satellite error correction information obtained based on the satellite error correction model and the first location is also accurate.

According to a fourth aspect, an embodiment of this application provides another satellite positioning method. The method is applied to a first access network device. The method includes: receiving a first message from a UE, where the first message is used to obtain a location that is of the UE and that is obtained by using a satellite observation quantity of the UE, and the first message includes the satellite observation quantity of the UE; obtaining a first location of the UE; determining, based on the first location of the UE, a plurality of second access network devices adjacent to the first access network device; determining a second location of the UE based on a satellite observation quantity of the first access network device, satellite observation quantities of the plurality of second access network devices, the first location, and the satellite observation quantity of the UE, where precision of the second location is higher than precision of the first location; and sending a second message to the UE, where the second message indicates the second location. Optionally, the obtaining a first location of the UE may be determining an approximate location of the UE, that is, the first location, without relying on a satellite signal received by the UE. In other words, the UE does not need to determine the probability location of the UE based on received satellite information.

In this embodiment of this application, the first location of the UE is obtained, and the first access network device determines the approximate location of the UE without relying on the satellite signal received by the UE. Therefore, in a scenario in which the UE cannot determine the approximate location of the UE or cannot accurately determine the approximate location of the UE based on the satellite signal, high-precision positioning of the UE can be implemented.

In a possible implementation of the fourth aspect, the determining a second location of the UE based on a satellite observation quantity of the first access network device, satellite observation quantities obtained from the plurality of second access network devices, the first location, and the satellite observation quantity of the UE includes: generating a satellite error correction model based on the satellite observation quantity of the first access network device and the satellite observation quantity of the plurality of second access network devices; and determining the second location of the UE based on the satellite error correction model, the first location, and the satellite observation quantity of the UE.

In this implementation, the satellite error correction model can be accurately generated based on the satellite observation quantity of the first access network device and the satellite observation quantity of the plurality of second access network devices. Because the first location is accurate, the second location that is of the UE and that is determined based on the satellite error correction model, the first location, and the satellite observation quantity of the UE is also accurate.

In a possible implementation of the fourth aspect, the determining the second location of the UE based on the satellite error correction model, the first location, and the satellite observation quantity of the UE includes: obtaining first satellite error correction information based on the satellite error correction model and the first location, where the first satellite error correction information indicates satellite error correction information of the location of the UE; correcting the satellite observation quantity of the UE based on the first satellite error correction information; and determining the second location by using a corrected satellite observation quantity of the UE.

In this implementation, because the first location is accurate, the second location may be accurately determined.

In a possible implementation of the third aspect or the fourth aspect, the determining, based on the first location of the UE, a plurality of second access network devices adjacent to the first access network device includes: selecting, based on the first location of the UE, the plurality of second access network devices that meet a first condition from second access network devices adjacent to the first access network device, where the first condition includes one or more of the following: a distance from the first access network device is less than a first threshold, a distance from the UE is less than a second threshold, the location of the UE is included in a coverage area, and a topology structure formed with the first access network device covers the UE.

In this implementation, the plurality of second access network devices that meet the first condition are selected based on the first location of the UE from the second access network devices adjacent to the first access network device, to obtain a more effective satellite observation quantity.

In a possible implementation of the third aspect or the fourth aspect, the obtaining a first location of the UE includes: performing 5G single-station positioning measurement with the UE, to obtain a positioning measurement result; and obtaining the first location of the UE based on the positioning measurement result.

In this implementation, the first location of the UE may be quickly and accurately obtained, and this implementation is independent of the satellite signal received by the UE, and is applicable to an environment like an urban canyon.

According to a fifth aspect, this application provides another satellite positioning method. The method includes: A first access network device receives a first message from a UE, where the first message is used to obtain satellite error correction information of a location of the UE. The first access network device obtains a first location of the UE based on the first message, and sends a third message to a first network element, where the third message is used to obtain the satellite error correction information of the location of the UE, the third message includes first location information, and the first location information indicates the first location of the UE. The first network element obtains the first location based on the third message. The first network element obtains first satellite error correction information based on the first location and a satellite error correction model, where the first satellite error correction information indicates the satellite error correction information of the location of the UE. The first network element sends a fourth message to the first access network device, where the fourth message indicates the first satellite error correction information. The first access network device sends a second message to the UE, where the second message indicates the first satellite error correction information.

In this embodiment of this application, the first location of the UE is obtained, and the first access network device determines an approximate location of the UE without relying on a satellite signal received by the UE. Therefore, in a scenario in which the UE cannot determine the approximate location of the UE or cannot accurately determine the approximate location of the UE based on the satellite signal, high-precision positioning of the UE can be implemented.

According to a sixth aspect, this application provides another satellite positioning method. The method includes: A first access network device receives a first message from a UE, where the first message is used to obtain satellite error correction information of a location of the UE. The first access network device performs positioning measurement on the UE based on the first message, to obtain positioning measurement information, where the positioning measurement information is used to determine a first location of the UE. The first access network device sends a third message to a first network element, where the third message is used to obtain the satellite error correction information of the location of the UE, and the third message includes the positioning measurement information. The first network element obtains the first location based on the third message. The first network element obtains first satellite error correction information based on the first location and a satellite error correction model, where the first satellite error correction information indicates the satellite error correction information of the location of the UE. The first network element sends a fourth message to the first access network device, where the fourth message indicates the first satellite error correction information. The first access network device sends a second message to the UE, where the second message indicates the first satellite error correction information.

In this embodiment of this application, the first location of the UE is obtained, and the first access network device determines an approximate location of the UE without relying on a satellite signal received by the UE. Therefore, in a scenario in which the UE cannot determine the approximate location of the UE or cannot accurately determine the approximate location of the UE based on the satellite signal, high-precision positioning of the UE can be implemented.

In a possible implementation of the fifth aspect or the sixth aspect, that the first access network device obtains a first location of the UE based on the first message includes: The first access network device performs 5G single-station positioning measurement with the UE, to obtain a positioning measurement result. The first access network device obtains the first location of the UE based on the positioning measurement result.

In this implementation, the first location of the UE may be quickly and accurately determined, and this implementation is independent of the satellite signal received by the UE.

According to a seventh aspect, this application provides another satellite positioning method. The method includes: A first access network device receives a first message from a UE, where the first message is used to obtain a location that is of the UE and that is obtained by using a satellite observation quantity of the UE, and the first message includes the satellite observation quantity of the UE. The first access network device obtains a first location of the UE based on the first message, and sends a third message to a first network element, where the third message is used to obtain the location that is of the UE and that is obtained by using the satellite observation quantity of the UE, the third message includes first location information and the satellite observation quantity of the UE, and the first location information indicates the first location of the UE. The first network element obtains the first location based on the third message. The first network element determines a second location of the UE based on the first location, a satellite error correction model, and the satellite observation quantity of the UE, where precision of the second location is higher than precision of the first location. The first network element sends a fourth message to the first access network device, where the fourth message indicates the second location. The first access network device sends a second message to the UE, where the second message indicates the second location.

In this embodiment of this application, the first location of the UE is obtained, and the first access network device determines an approximate location of the UE without relying on a satellite signal received by the UE. Therefore, in a scenario in which the UE cannot determine the approximate location of the UE or cannot accurately determine the approximate location of the UE based on the satellite signal, high-precision positioning of the UE can be implemented.

According to an eighth aspect, this application provides another satellite positioning method. The method includes: A first access network device receives a first message from a UE, where the first message is used to obtain a location that is of the UE and that is obtained by using a satellite observation quantity of the UE, and the first message includes the satellite observation quantity of the UE. The first access network device performs positioning measurement on the UE based on the first message, to obtain positioning measurement information, where the positioning measurement information is used to determine a first location of the UE. The first access network device sends a third message to a first network element based on the first message, where the third message is used to obtain the location that is of the UE and that is obtained by using the satellite observation quantity of the UE, and the third message includes the positioning measurement information and the satellite observation quantity of the UE. The first network element obtains the first location and the satellite observation quantity of the UE based on the third message. The first network element determines a second location of the UE based on the first location, a satellite error correction model, and the satellite observation quantity of the UE, where precision of the second location is higher than precision of the first location. The first network element sends a fourth message to the first access network device, where the fourth message indicates the second location. The first access network device sends a second message to the UE, where the second message indicates the second location.

In this embodiment of this application, the first location of the UE is obtained, and the first access network device determines an approximate location of the UE without relying on a satellite signal received by the UE. Therefore, in a scenario in which the UE cannot determine the approximate location of the UE or cannot accurately determine the approximate location of the UE based on the satellite signal, high-precision positioning of the UE can be implemented.

In a possible implementation of the seventh aspect or the eighth aspect, that the first network element determines a second location of the UE based on the first location, a satellite error correction model, and the satellite observation quantity of the UE includes: The first network element obtains first satellite error correction information based on the satellite error correction model and the first location, where the first satellite error correction information indicates satellite error correction information of the location of the UE. The first network element corrects the satellite observation quantity of the UE based on the first satellite error correction information. The first network element determines the second location by using a corrected satellite observation quantity of the UE.

In this implementation, because the first location is accurate, the second location may be accurately determined.

According to a ninth aspect, this application provides another satellite positioning method. The method is applied to a first access network device. The method includes: receiving a first message from a UE, where the first message is used to obtain satellite error correction information of a location of the UE; obtaining a first location of the UE based on the first message, and sending a third message to a first network element, where the third message is used to obtain the satellite error correction information of the location of the UE, the third message includes first location information, and the first location information indicates the first location of the UE; receiving a fourth message from the first network element, where the fourth message indicates first satellite error correction information, and the first satellite error correction information indicates the satellite error correction information that is of the location of the UE and that is obtained by the first network element by using the first location; and sending a second message to the UE, where the second message indicates the first satellite error correction information. Optionally, the obtaining a first location of the UE may be determining an approximate location of the UE, that is, the first location, without relying on a satellite signal received by the UE. In other words, the UE does not need to determine the probability location of the UE based on received satellite information.

In this embodiment of this application, the first location of the UE is obtained, and the first access network device determines the approximate location of the UE without relying on the satellite signal received by the UE. Therefore, in a scenario in which the UE cannot determine the approximate location of the UE or cannot accurately determine the approximate location of the UE based on the satellite signal, high-precision positioning of the UE can be implemented.

In a possible implementation of the ninth aspect, the obtaining a first location of the UE based on the first message includes: performing 5G single-station positioning measurement with the UE based on the first message, to obtain a positioning measurement result; and obtaining the first location of the UE based on the positioning measurement result.

In this implementation, the first location of the UE may be quickly and accurately determined, and this implementation is independent of the satellite signal received by the UE.

According to a tenth aspect, this application provides another satellite positioning method. The method is applied to a first access network device. The method includes: receiving a first message from a UE, where the first message is used to obtain satellite error correction information of a location of the UE; performing positioning measurement on the UE based on the first message, to obtain positioning measurement information, where the positioning measurement information is used to determine a first location of the UE; sending a third message to a first network element, where the third message is used to obtain the satellite error correction information of the location of the UE, and the third message includes the positioning measurement information; receiving a fourth message from the first network element, where the fourth message indicates first satellite error correction information, and the first satellite error correction information indicates the satellite error correction information that is of the location of the UE and that is obtained by the first network element by using the first location; and sending a second message to the UE, where the second message indicates the first satellite error correction information.

In this embodiment of this application, the positioning measurement is performed on the UE to obtain the positioning measurement information, and the third message is sent to the first network element. The first access network device determines an approximate location of the UE without relying on a satellite signal received by the UE. Therefore, in a scenario in which the UE cannot determine the approximate location of the UE or cannot accurately determine the approximate location of the UE based on the satellite signal, high-precision positioning of the UE can be implemented.

According to an eleventh aspect, an embodiment of this application provides another satellite positioning method. The method is applied to a first network element. The method includes: receiving a third message from a first access network device, where the third message is used to obtain satellite error correction information of a location of a UE, the third message includes first location information, and the first location information indicates a first location of the UE; obtaining the first location based on the third message; obtaining first satellite error correction information based on a satellite observation quantity of the first access network device, satellite observation quantities of a plurality of second access network devices adjacent to the first access network device, and the first location, where the first satellite error correction information indicates the satellite error correction information of the location of the UE; and sending a fourth message to the first access network device, where the fourth message indicates the first satellite error correction information.

In this embodiment of this application, the first location of the UE is obtained based on the third message from the first access network device. A manner in which the first network element obtains an approximate location of the UE is independent of a satellite signal received by the UE. Therefore, in a scenario in which the UE cannot determine the approximate location of the UE or cannot accurately determine the approximate location of the UE based on the satellite signal, high-precision positioning of the UE can be implemented.

According to a twelfth aspect, an embodiment of this application provides another satellite positioning method. The method is applied to a first network element. The method includes: receiving a third message from a first access network device, where the third message is used to obtain satellite error correction information of a location of a UE, the third message includes positioning measurement information, and the positioning measurement information is used to determine a first location of the UE; obtaining the first location based on the third message; obtaining first satellite error correction information based on a satellite observation quantity of the first access network device, satellite observation quantities of a plurality of second access network devices adjacent to the first access network device, and the first location, where the first satellite error correction information indicates the satellite error correction information of the location of the UE; and sending a fourth message to the first access network device, where the fourth message indicates the first satellite error correction information.

In this embodiment of this application, the first location of the UE is obtained based on the third message from the first access network device. A manner in which the first network element obtains an approximate location of the UE is independent of a satellite signal received by the UE. Therefore, in a scenario in which the UE cannot determine the approximate location of the UE or cannot accurately determine the approximate location of the UE based on the satellite signal, high-precision positioning of the UE can be implemented.

In a possible implementation of the eleventh aspect or the twelfth aspect, the obtaining first satellite error correction information based on a satellite observation quantity of the first access network device, satellite observation quantities of a plurality of second access network devices adjacent to the first access network device, and the first location includes: generating a satellite error correction model based on the satellite observation quantity of the first access network device and the satellite observation quantity of the plurality of second access network devices; and obtaining the first satellite error correction information based on the satellite error correction model and the first location.

In this implementation, the satellite error correction model can be accurately generated based on the satellite observation quantity of the first access network device and the satellite observation quantity of the plurality of second access network devices. Because the first location is accurate, the first satellite error correction information obtained based on the satellite error correction model and the first location is also accurate.

According to a thirteenth aspect, this application provides another satellite positioning method. The method is applied to a first access network device. The method includes: receiving a first message from a UE, where the first message is used to obtain a location that is of the UE and that is obtained by using a satellite observation quantity of the UE, and the first message includes the satellite observation quantity of the UE; obtaining a first location of the UE based on the first message, and sending a third message to a first network element, where the third message is used to obtain the location that is of the UE and that is obtained by using the satellite observation quantity of the UE, the third message includes first location information and the satellite observation quantity of the UE, and the first location information indicates the first location of the UE; receiving a fourth message from the first network element, where the fourth message indicates a second location of the UE; and sending a second message to the UE, where the second message indicates the second location.

In this embodiment of this application, the first location of the UE is obtained, and the first access network device determines an approximate location of the UE without relying on a satellite signal received by the UE. Therefore, in a scenario in which the UE cannot determine the approximate location of the UE or cannot accurately determine the approximate location of the UE based on the satellite signal, high-precision positioning of the UE can be implemented.

In a possible implementation of the thirteenth aspect, the obtaining a first location of the UE based on the first message includes: performing 5G single-station positioning measurement with the UE based on the first message, to obtain a positioning measurement result; and obtaining the first location of the UE based on the positioning measurement result.

In this implementation, the first location of the UE may be quickly and accurately determined, and this implementation is independent of the satellite signal received by the UE.

According to a fourteenth aspect, this application provides another satellite positioning method. The method is applied to a first access network device. The method includes: receiving a first message from a UE, where the first message is used to obtain a location that is of the UE and that is obtained by using a satellite observation quantity of the UE, and the first message includes the satellite observation quantity of the UE; performing positioning measurement on the UE based on the first message, to obtain positioning measurement information, where the positioning measurement information is used to determine a first location of the UE; sending a third message to a first network element, where the third message is used to obtain the location that is of the UE and that is obtained by using the satellite observation quantity of the UE, and the third message includes the positioning measurement information and the satellite observation quantity of the UE; receiving a fourth message from the first network element, where the fourth message indicates a second location of the UE; and sending a second message to the UE, where the second message indicates the second location.

In this embodiment of this application, the positioning measurement is performed on the UE to obtain the positioning measurement information, and the third message is sent to the first network element. The first access network device determines an approximate location of the UE without relying on a satellite signal received by the UE. Therefore, in a scenario in which the UE cannot determine the approximate location of the UE or cannot accurately determine the approximate location of the UE based on the satellite signal, high-precision positioning of the UE can be implemented.

According to a fifteenth aspect, an embodiment of this application provides another satellite positioning method. The method is applied to a first network element. The method includes: receiving a third message from a first access network device, where the third message is used to obtain a location that is of a UE and that is obtained by using a satellite observation quantity of the UE, the third message includes first location information and the satellite observation quantity of the UE, and the first location information indicates a first location of the UE; obtaining the first location and the satellite observation quantity of the UE based on the third message; determining a second location of the UE based on the first location, a satellite error correction model, and the satellite observation quantity of the UE, where precision of the second location is higher than precision of the first location; and sending a fourth message to the first access network device, where the fourth message indicates the second location.

In this embodiment of this application, the first location of the UE is obtained based on the third message from the first access network device. A manner in which the first network element obtains an approximate location of the UE is independent of a satellite signal received by the UE. Therefore, in a scenario in which the UE cannot determine the approximate location of the UE or cannot accurately determine the approximate location of the UE based on the satellite signal, high-precision positioning of the UE can be implemented.

According to a sixteenth aspect, an embodiment of this application provides another satellite positioning method. The method is applied to a first network element. The method includes: receiving a third message from a first access network device, where the third message is used to obtain a location that is of a UE and that is obtained by using a satellite observation quantity of the UE, the third message includes positioning measurement information and the satellite observation quantity of the UE, and the positioning measurement information is used to determine a first location of the UE; obtaining the first location and the satellite observation quantity of the UE based on the third message; determining a second location of the UE based on the first location, a satellite error correction model, and the satellite observation quantity of the UE, where precision of the second location is higher than precision of the first location; and sending a fourth message to the first access network device, where the fourth message indicates the second location.

In this embodiment of this application, the first location of the UE is obtained based on the third message from the first access network device. A manner in which the first network element obtains an approximate location of the UE is independent of a satellite signal received by the UE. Therefore, in a scenario in which the UE cannot determine the approximate location of the UE or cannot accurately determine the approximate location of the UE based on the satellite signal, high-precision positioning of the UE can be implemented.

In a possible implementation of the fifteenth aspect or the sixteenth aspect, the determining a second location of the UE based on a satellite observation quantity of the first access network device, satellite observation quantities of the plurality of second access network devices, the first location, and the satellite observation quantity of the UE includes: generating the satellite error correction model based on the satellite observation quantity of the first access network device and the satellite observation quantity of the plurality of second access network devices; and determining the second location of the UE based on the satellite error correction model, the first location, and the satellite observation quantity of the UE.

In this implementation, the satellite error correction model can be accurately generated based on the satellite observation quantity of the first access network device and the satellite observation quantity of the plurality of second access network devices. Because the first location is accurate, the second location that is of the UE and that is determined based on the satellite error correction model, the first location, and the satellite observation quantity of the UE is also accurate.

In a possible implementation of the fifteenth aspect or the sixteenth aspect, the determining the second location of the UE based on the satellite error correction model, the first location, and the satellite observation quantity of the UE includes: obtaining first satellite error correction information based on the satellite error correction model and the first location, where the first satellite error correction information indicates satellite error correction information of the location of the UE; correcting the satellite observation quantity of the UE based on the first satellite error correction information; and determining the second location by using a corrected satellite observation quantity of the UE.

In this implementation, because the first location is accurate, the second location may be accurately determined.

According to a seventeenth aspect, an embodiment of this application provides a communication apparatus. The communication apparatus has a function of implementing behavior in the method embodiment in the first aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver module is configured to send a first message to a first access network device that provides a service for a UE, where the first message is used to obtain satellite error correction information of a location of the UE. The processing module is configured to respond to positioning measurement initiated by the first access network device, where the positioning measurement initiated by the first access network device is used to determine a first location of the UE. The transceiver module is further configured to receive a second message from the first access network device, where the second message indicates first satellite error correction information, and the first satellite error correction information indicates the satellite error correction information that is of the location of the UE and that is obtained by the first access network device by using the first location. The processing module is further configured to determine a second location of the UE based on the first satellite error correction information, where precision of the second location is higher than precision of the first location.

According to an eighteenth aspect, an embodiment of this application provides a communication apparatus. The communication apparatus has a function of implementing behavior in the method embodiment in the second aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver module is configured to send a first message to a first access network device that provides a service for a UE, where the first message is used to obtain a location that is of the UE and that is obtained by using a satellite observation quantity of the UE, and the first message includes the satellite observation quantity of the UE. The processing module is configured to respond to positioning measurement initiated by the first access network device, where the positioning measurement initiated by the first access network device is used to determine a first location of the UE. The transceiver module is further configured to receive a second message from the first access network device, where the second message indicates a second location of the UE, precision of the second location is higher than precision of the first location, and the second location is obtained by the first access network device by using the satellite observation quantity of the UE and the first location.

In a possible implementation of the seventeenth aspect or the eighteenth aspect, the processing module is specifically configured to perform 5G single-station positioning measurement with the first access network device, where measurement information obtained by performing the 5G single-station positioning measurement with the first access network device is used to determine the first location.

For technical effects brought by the possible implementations of the seventeenth aspect, refer to descriptions of technical effects of the first aspect or the possible implementations of the first aspect.

For technical effects brought by the possible implementations of the eighteenth aspect, refer to descriptions of technical effects of the second aspect or the possible implementations of the second aspect.

According to a nineteenth aspect, an embodiment of this application provides a communication apparatus. The communication apparatus has a function of implementing behavior in the method embodiment in the third aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver module is configured to receive a first message from a UE, where the first message is used to obtain satellite error correction information of a location of the UE. The processing module is configured to: obtain a first location of the UE; determine, based on the first location of the UE, a plurality of second access network devices adjacent to the first access network device; and obtain first satellite error correction information based on a satellite observation quantity of the first access network device, satellite observation quantities of the plurality of second access network devices, and the first location, where the first satellite error correction information indicates the satellite error correction information of the location of the UE. The transceiver module is further configured to send a second message to the UE, where the second message indicates the first satellite error correction information.

In a possible implementation of the nineteenth aspect, the processing module is specifically configured to: generate a satellite error correction model based on the satellite observation quantity of the first access network device and the satellite observation quantity of the plurality of second access network devices; and obtain the first satellite error correction information based on the satellite error correction model and the first location.

For technical effects brought by the possible implementations of the nineteenth aspect, refer to descriptions of technical effects of the third aspect or the possible implementations of the third aspect.

According to a twentieth aspect, an embodiment of this application provides a communication apparatus. The communication apparatus has a function of implementing behavior in the method embodiment in the fourth aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver module is configured to receive a first message from a UE, where the first message is used to obtain a location that is of the UE and that is obtained by using a satellite observation quantity of the UE, and the first message includes the satellite observation quantity of the UE. The processing module is configured to: obtain a first location of the UE; determine, based on the first location of the UE, a plurality of second access network devices adjacent to the first access network device; and determine a second location of the UE based on a satellite observation quantity of the first access network device, satellite observation quantities of the plurality of second access network devices, the first location, and the satellite observation quantity of the UE, where precision of the second location is higher than precision of the first location. The transceiver module is further configured to send a second message to the UE, where the second message indicates the second location.

In a possible implementation of the twentieth aspect, the processing module is specifically configured to: generate a satellite error correction model based on the satellite observation quantity of the first access network device and the satellite observation quantity of the plurality of second access network devices; and determine the second location of the UE based on the satellite error correction model, the first location, and the satellite observation quantity of the UE.

In a possible implementation of the twentieth aspect, the processing module is specifically configured to: obtain first satellite error correction information based on the satellite error correction model and the first location, where the first satellite error correction information indicates satellite error correction information of the location of the UE; correct the satellite observation quantity of the UE based on the first satellite error correction information; and determine the second location by using a corrected satellite observation quantity of the UE.

In a possible implementation of the nineteenth aspect or the twentieth aspect, the processing module is specifically configured to select, based on the first location of the UE, the plurality of second access network devices that meet a first condition from second access network devices adjacent to the first access network device, where the first condition includes one or more of the following: a distance from the first access network device is less than a first threshold, a distance from the UE is less than a second threshold, the location of the UE is included in a coverage area, and a topology structure formed with the first access network device covers the UE.

In a possible implementation of the nineteenth aspect or the twentieth aspect, the processing module is specifically configured to: perform 5G single-station positioning measurement with the UE, to obtain a positioning measurement result; and obtain the first location of the UE based on the positioning measurement result.

For technical effects brought by the possible implementations of the twentieth aspect, refer to descriptions of technical effects of the fourth aspect or the possible implementations of the fourth aspect.

According to a twenty-first aspect, an embodiment of this application provides a communication apparatus. The communication apparatus has a function of implementing behavior in the method embodiment in the ninth aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver module is configured to receive a first message from a UE, where the first message is used to obtain satellite error correction information of a location of the UE. The processing module is configured to obtain a first location of the UE based on the first message. The transceiver module is further configured to: send a third message to a first network element, where the third message is used to obtain the satellite error correction information of the location of the UE, the third message includes first location information, and the first location information indicates the first location of the UE; receive a fourth message from the first network element, where the fourth message indicates first satellite error correction information, and the first satellite error correction information indicates the satellite error correction information that is of the location of the UE and that is obtained by the first network element by using the first location; and send a second message to the UE, where the second message indicates the first satellite error correction information.

In a possible implementation of the twenty-first aspect, the processing module is specifically configured to: perform 5G single-station positioning measurement with the UE based on the first message, to obtain a positioning measurement result; and obtain the first location of the UE based on the positioning measurement result.

For technical effects brought by the possible implementations of the twenty-first aspect, refer to descriptions of technical effects of the ninth aspect or the possible implementations of the ninth aspect.

According to a twenty-second aspect, an embodiment of this application provides a communication apparatus. The communication apparatus has a function of implementing behavior in the method embodiment in the tenth aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver module is configured to receive a first message from a UE, where the first message is used to obtain satellite error correction information of a location of the UE. The processing module is configured to perform positioning measurement on the UE based on the first message, to obtain positioning measurement information, where the positioning measurement information is used to determine a first location of the UE. The transceiver module is further configured to: send a third message to a first network element, where the third message is used to obtain the satellite error correction information of the location of the UE, and the third message includes the positioning measurement information; receive a fourth message from the first network element, where the fourth message indicates first satellite error correction information, and the first satellite error correction information indicates the satellite error correction information that is of the location of the UE and that is obtained by the first network element by using the first location; and send a second message to the UE, where the second message indicates the first satellite error correction information.

For technical effects brought by the possible implementations of the twenty-second aspect, refer to descriptions of technical effects of the tenth aspect or the possible implementations of the tenth aspect.

According to a twenty-third aspect, an embodiment of this application provides a communication apparatus. The communication apparatus has a function of implementing behavior in the method embodiment in the eleventh aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. **In** a possible implementation, the communication apparatus includes a processing module and a transceiver module. The transceiver module is configured to receive a third message from a first access network device, where the third message is used to obtain satellite error correction information of a location of a UE, the third message includes first location information, and the first location information indicates a first location of the UE. The processing module is configured to: obtain the first location based on the third message; and obtain first satellite error correction information based on a satellite observation quantity of the first access network device, satellite observation quantities of a plurality of second access network devices adjacent to the first access network device, and the first location, where the first satellite error correction information indicates the satellite error correction information of the location of the UE. The transceiver module is further configured to send a fourth message to the first access network device, where the fourth message indicates the first satellite error correction information.

For technical effects brought by the possible implementations of the twenty-third aspect, refer to descriptions of technical effects of the eleventh aspect or the possible implementations of the eleventh aspect.

According to a twenty-fourth aspect, an embodiment of this application provides a communication apparatus. The communication apparatus has a function of implementing behavior in the method embodiment in the twelfth aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver module is configured to receive a third message from a first access network device, where the third message is used to obtain satellite error correction information of a location of a UE, the third message includes positioning measurement information, and the positioning measurement information is used to determine a first location of the UE. The processing module is configured to: obtain the first location based on the third message; and obtain first satellite error correction information based on a satellite observation quantity of the first access network device, satellite observation quantities of a plurality of second access network devices adjacent to the first access network device, and the first location, where the first satellite error correction information indicates the satellite error correction information of the location of the UE. The transceiver module is further configured to send a fourth message to the first access network device, where the fourth message indicates the first satellite error correction information.

In a possible implementation of the twenty-third aspect or the twenty-fourth aspect, the processing module is specifically configured to: generate a satellite error correction model based on the satellite observation quantity of the first access network device and the satellite observation quantity of the plurality of second access network devices; and obtain the first satellite error correction information based on the satellite error correction model and the first location.

For technical effects brought by the possible implementations of the twenty-fourth aspect, refer to descriptions of technical effects of the twelfth aspect or the possible implementations of the twelfth aspect.

According to a twenty-fifth aspect, an embodiment of this application provides a communication apparatus. The communication apparatus has a function of implementing behavior in the method embodiment in the thirteenth aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver module is configured to receive a first message from a UE, where the first message is used to obtain a location that is of the UE and that is obtained by using a satellite observation quantity of the UE, and the first message includes the satellite observation quantity of the UE. The processing module is configured to obtain a first location of the UE based on the first message. The transceiver module is further configured to: send a third message to a first network element, where the third message is used to obtain the location that is of the UE and that is obtained by using the satellite observation quantity of the UE, the third message includes first location information and the satellite observation quantity of the UE, and the first location information indicates the first location of the UE; receive a fourth message from the first network element, where the fourth message indicates a second location of the UE; and send a second message to the UE, where the second message indicates the second location.

In a possible implementation of the twenty-fifth aspect, the processing module is specifically configured to: perform 5G single-station positioning measurement with the UE based on the first message, to obtain a positioning measurement result; and obtain the first location of the UE based on the positioning measurement result.

For technical effects brought by the possible implementations of the twenty-fifth aspect, refer to descriptions of technical effects of the thirteenth aspect or the possible implementations of the thirteenth aspect.

According to a twenty-sixth aspect, an embodiment of this application provides a communication apparatus. The communication apparatus has a function of implementing behavior in the method embodiment in the fourteenth aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver module is configured to receive a first message from a UE, where the first message is used to obtain a location that is of the UE and that is obtained by using a satellite observation quantity of the UE, and the first message includes the satellite observation quantity of the UE. The processing module is configured to perform positioning measurement on the UE based on the first message, to obtain positioning measurement information, where the positioning measurement information is used to determine a first location of the UE. The transceiver module is further configured to: send a third message to a first network element, where the third message is used to obtain the location that is of the UE and that is obtained by using the satellite observation quantity of the UE, and the third message includes the positioning measurement information and the satellite observation quantity of the UE; receive a fourth message from the first network element, where the fourth message indicates a second location of the UE; and send a second message to the UE, where the second message indicates the second location.

For technical effects brought by the twenty-sixth aspect, refer to descriptions of technical effects of the fourteenth aspect.

According to a twenty-seventh aspect, an embodiment of this application provides a communication apparatus. The communication apparatus has a function of implementing behavior in the method embodiment in the fifteenth aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver module is configured to receive a third message from a first access network device, where the third message is used to obtain a location that is of a UE and that is obtained by using a satellite observation quantity of the UE, the third message includes first location information and the satellite observation quantity of the UE, and the first location information indicates a first location of the UE. The processing module is configured to: obtain the first location and the satellite observation quantity of the UE based on the third message; and determine a second location of the UE based on the first location, a satellite error correction model, and the satellite observation quantity of the UE, where precision of the second location is higher than precision of the first location. The transceiver module is further configured to send a fourth message to the first access network device, where the fourth message indicates the second location.

For technical effects brought by the twenty-seventh aspect, refer to descriptions of technical effects of the fifteenth aspect.

According to a twenty-eighth aspect, an embodiment of this application provides a communication apparatus. The communication apparatus has a function of implementing behavior in the method embodiment in the sixteenth aspect. The communication apparatus may be a communication device, may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver module is configured to receive a third message from a first access network device, where the third message is used to obtain a location that is of a UE and that is obtained by using a satellite observation quantity of the UE, the third message includes positioning measurement information and the satellite observation quantity of the UE, and the positioning measurement information is used to determine a first location of the UE. The processing module is configured to: obtain the first location and the satellite observation quantity of the UE based on the third message; and determine a second location of the UE based on the first location, a satellite error correction model, and the satellite observation quantity of the UE, where precision of the second location is higher than precision of the first location. The transceiver module is further configured to send a fourth message to the first access network device, where the fourth message indicates the second location.

In a possible implementation of the twenty-seventh aspect or the twenty-eighth aspect, the processing module is specifically configured to: generate the satellite error correction model based on a satellite observation quantity of the first access network device and satellite observation quantities of a plurality of second access network devices; and determine the second location of the UE based on the satellite error correction model, the first location, and the satellite observation quantity of the UE.

In a possible implementation of the twenty-seventh aspect or the twenty-eighth aspect, the processing module is specifically configured to: obtain first satellite error correction information based on the satellite error correction model and the first location, where the first satellite error correction information indicates satellite error correction information of the location of the UE; correct the satellite observation quantity of the UE based on the first satellite error correction information; and determine the second location by using a corrected satellite observation quantity of the UE.

For technical effects brought by the possible implementations of the twenty-eighth aspect, refer to descriptions of technical effects of the sixteenth aspect or the possible implementations of the sixteenth aspect.

According to a twenty-ninth aspect, an embodiment of this application provides another communication apparatus. The communication apparatus includes a processor. The processor is coupled to a memory. The memory is configured to store a program or instructions. When the program or the instructions are executed by the processor, the communication apparatus is enabled to perform the method shown in any one of the first aspect to the fourth aspect; or when the program or the instructions are executed by the processor, the communication apparatus is enabled to perform the method shown in any one of the ninth aspect to the sixteenth aspect.

In this embodiment of this application, in a process of performing the method, a process of sending information (or a signal) in the method may be understood as a process of outputting the information based on instructions of the processor. When the information is output, the processor outputs the information to a transceiver, so that the transceiver transmits the information. After the information is output by the processor, other processing may further need to be performed on the information before the information arrives at the transceiver. Similarly, when the processor receives input information, the transceiver receives the information, and inputs the information into the processor. Further, after the transceiver receives the information, other processing may need to be performed on the information before the information is input into the processor.

An operation such as sending and/or receiving related to the processor may be generally understood as an instruction output based on the processor if there is no special description, or if the operation does not conflict with an actual function or internal logic of the operation in related descriptions.

In an implementation process, the processor may be a processor specially configured to perform these methods, or a processor, for example, a general-purpose processor, that executes the computer instructions in the memory to perform these methods. For example, the processor may be further configured to execute the program stored in the memory. When the program is executed, the communication apparatus is enabled to perform the method shown in any one of the first aspect or the possible implementations of the first aspect.

In a possible implementation, the memory is located outside the communication apparatus. In a possible implementation, the memory is located in the communication apparatus.

In a possible implementation, the processor and the memory may alternatively be integrated into one device, that is, the processor and the memory may alternatively be integrated together.

In a possible implementation, the communication apparatus further includes the transceiver. The transceiver is configured to: receive a signal, send a signal, or the like.

According to a thirtieth aspect, this application provides another communication apparatus. The communication apparatus includes a processing circuit and an interface circuit. The interface circuit is configured to: obtain data or output data. The processing circuit is configured to perform the method shown in any one of the first aspect to the fourth aspect, or the processing circuit is configured to perform the method shown in any one of the ninth aspect to the sixteenth aspect.

According to a thirty-first aspect, this application provides a computer-readable storage medium. The computer-readable storage medium stores a computer program, and the computer program includes program instructions. When the program instructions are executed, a computer is enabled to perform the method shown in any one of the first aspect to the fourth aspect, or when the program instructions are executed, a computer is enabled to perform the method shown in any one of the ninth aspect to the sixteenth aspect.

According to a thirty-second aspect, this application provides a computer program product. The computer program product includes a computer program, and the computer program includes program instructions. When the program instructions are executed, a computer is enabled to perform the method shown in any one of the first aspect to the fourth aspect, or when the program instructions are executed, a computer is enabled to perform the method shown in any one of the ninth aspect to the sixteenth aspect.

According to a thirty-third aspect, this application provides a communication system, including the communication apparatus according to any one of the seventeenth aspect or the possible implementations of the seventeenth aspect, and the communication apparatus according to any one of the nineteenth aspect or the possible implementations of the nineteenth aspect.

According to a thirty-fourth aspect, this application provides a communication system, including the communication apparatus according to any one of the eighteenth aspect or the possible implementations of the eighteenth aspect, and the communication apparatus according to any one of the twentieth aspect or the possible implementations of the twentieth aspect.

According to a thirty-fifth aspect, this application provides a communication system, including the communication apparatus according to any one of the twenty-first aspect or the possible implementations of the twenty-first aspect, and the communication apparatus according to any one of the twenty-third aspect or the possible implementations of the twenty-third aspect. Optionally, the communication system further includes the communication apparatus according to any possible implementation of the seventeenth aspect or the communication apparatus according to any possible implementation of the eighteenth aspect.

According to a thirty-sixth aspect, this application provides a communication system, including the communication apparatus according to any one of the twenty-second aspect or the possible implementations of the twenty-second aspect, and the communication apparatus according to any one of the twenty-fourth aspect or the possible implementations of the twenty-fourth aspect. Optionally, the communication system further includes the communication apparatus according to any possible implementation of the seventeenth aspect or the communication apparatus according to any possible implementation of the eighteenth aspect.

According to a thirty-seventh aspect, this application provides a communication system, including the communication apparatus according to any one of the twenty-fifth aspect or the possible implementations of the twenty-fifth aspect, and the communication apparatus according to any one of the twenty-seventh aspect or the possible implementations of the twenty-seventh aspect. Optionally, the communication system further includes the communication apparatus according to any possible implementation of the seventeenth aspect or the communication apparatus according to any possible implementation of the eighteenth aspect.

According to a thirty-eighth aspect, this application provides a communication system, including the communication apparatus according to any one of the twenty-sixth aspect or the possible implementations of the twenty-sixth aspect, and the communication apparatus according to any one of the twenty-eighth aspect or the possible implementations of the twenty-eighth aspect. Optionally, the communication system further includes the communication apparatus according to any possible implementation of the seventeenth aspect or the communication apparatus according to any possible implementation of the eighteenth aspect.

According to a thirty-ninth aspect, this application provides a chip, including a processor and a communication interface. The processor reads, through the communication interface, instructions stored in a memory, to perform the method shown in any one of the first aspect to the fourth aspect, or perform the method shown in any one of the ninth aspect to the sixteenth aspect.

### BRIEF DESCRIPTION OF DRAWINGS

To describe technical solutions in embodiments of this application or in the background more clearly, the following describes accompanying drawings that need to be used in embodiments of this application or in the background.
FIG. 1 is a diagram of a basic principle of satellite positioning;
FIG. 2 is a diagram of a working principle of network RTK;
FIG. 3 shows an example of a satellite positioning system according to this application;
FIG. 4 is an interaction flowchart of a satellite positioning method according to an embodiment of this application;
FIG. 5 is an interaction flowchart of another satellite positioning method according to an embodiment of this application;
FIG. 6 is an interaction flowchart of another satellite positioning method according to an embodiment of this application;
FIG. 7 is an interaction flowchart of another satellite positioning method according to an embodiment of this application;
FIG. 8 is a diagram of a structure of a communication apparatus 800 according to an embodiment of this application;
FIG. 9 is a diagram of a structure of another communication apparatus 90 according to an embodiment of this application; and
FIG. 10 is a diagram of a structure of another communication apparatus 100 according to an embodiment of this application.

### DESCRIPTION OF EMBODIMENTS

Terms "first", "second", and the like in the specification, claims, and accompanying drawings of this application are merely used to distinguish between different objects, and are not used to describe a specific order. In addition, terms "include", "have", and any other variant thereof are intended to cover a non-exclusive inclusion. For example, processes, methods, systems, products, or devices that include a series of steps or units are not limited to listed steps or units, but optionally further include steps or units that are not listed, or optionally further include other steps or units inherent to these processes, methods, products, or devices.

An "embodiment" mentioned in the specification means that a specific feature, structure, or characteristic described with reference to the embodiment may be included in at least one embodiment of this application. The phrase shown in various locations in the specification may neither necessarily mean a same embodiment, nor mean an independent or optional embodiment exclusive from another embodiment. It may be understood explicitly and implicitly by a person skilled in the art that embodiments described in the specification may be combined with another embodiment.

Terms used in the following embodiments of this application are merely intended to describe specific embodiments, but are not intended to limit this application. "One", "a", "the", and "this" of singular expression forms used in the specification and the appended claims of this application are also intended to include plural expression forms, unless otherwise specified in the context clearly. It should be further understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more.

It may be understood that in embodiments of this application, "B corresponding to A" indicates that there is a correspondence between A and B, and B may be determined based on A. However, it should be further understood that determining (or generating) B based on (or according to) A does not mean that B is determined (or generated) based only on (or according to) A, and B may alternatively be determined (or generated) based on (or according to) A and/or other information.

The following first describes terms and technical solutions in embodiments of this application.

### 1. Satellite positioning

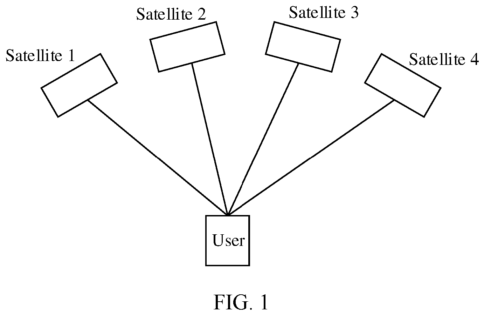

A basic principle of the satellite positioning is to measure distances between a plurality of satellites at known locations and a receiver (for example, a mobile phone) of a user and then obtain a specific location of the receiver by combining data of the plurality of satellites. FIG. 1 is a diagram of a basic principle of satellite positioning. Specifically, a specific location of a receiver is determined by combining distances between a plurality of satellites (for example, four satellites in FIG. 1) and a receiver (for example, a mobile phone) of a user. To achieve this purpose, a location of the satellite may be found in a satellite ephemeris based on time recorded by a satellite-borne clock. The distance between the user and the satellite is obtained by recording time it takes for a satellite signal to propagate to the user and then multiplying the time by the speed of light (due to interference from the ionosphere in the atmosphere, the distance is not a true distance between the user and the satellite, but a pseudorange). When working normally, the satellite continuously transmits a navigation message by using pseudo random code (pseudocode for short) including binary code elements 1 and 0. The navigation message includes information such as the satellite ephemeris, a working status, a clock correction, an ionospheric delay correction, and an atmospheric refraction correction. When receiving the navigation message, the user extracts satellite time and compares the satellite time with a clock of the user to know the distance between the satellite and the user, and then uses satellite ephemeris data in the navigation message to calculate a location at which the satellite transmits the message, so that information such as a location and a speed of the user in a WGS-84 geodetic coordinate system can be known.

### 2. Network real-time kinematic (real-time kinematic, RTK) positioning technology

Positioning precision of the satellite depends on accuracy of a satellite observation quantity (which may be referred to as observation information for short below) such as the pseudorange and a carrier phase, and the satellite observation quantity is affected by a satellite ephemeris error, an atmospheric error, and a receiver error. Therefore, to obtain a high-precision positioning result, errors of the satellite observation quantity need to be corrected.

A carrier phase observation value needs to be used in high-precision positioning measurement. The network RTK technology is an error correction technology that is based on the carrier phase observation value. The network RTK technology can be used to provide a three-dimensional positioning result, which reaches centimeter-level precision, of an observation site in a specified coordinate system in real time. RTK measurement needs at least two instruments: one reference station and one mobile station (at least one). The reference station observes the satellite, and transmits data to the mobile station in real time through a data link. The mobile station performs calculation with reference to the data of the reference station, to obtain centimeter-level positioning coordinates.

In a conventional RTK mode, the transmission of the data is performed between the reference station and the mobile station through radio, and signals are relatively stable in different time periods. However, each time an operation site is changed or the reference station is moved accidentally, the reference station needs to be re-established, and errors accumulate with a distance the mobile station moves, resulting in a limit to an operation distance. Emergence of the network RTK technology well resolves the problem of the distance limitation and a plurality of times of reference station establishment. In the network RTK, there are a plurality of reference stations. The user does not need to establish a reference station of the user, and a distance between the user and the reference station may be extended to hundreds of kilometers. A basic principle thereof is to sparsely and evenly deploy a plurality of reference stations in a large area to form a reference station network. In this way, basic principles and methods of a wide area differential global positioning system (global positioning system, GPS) and a local area differential GPS that has a plurality of reference stations can be used to try to eliminate or weaken impact of various system errors, so as to obtain a high-precision positioning result.

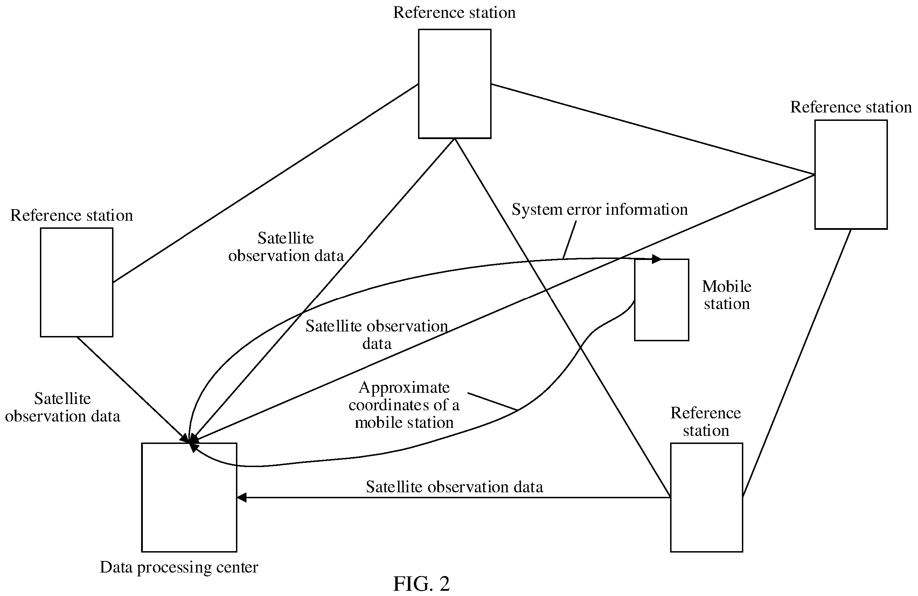

FIG. 2 is a diagram of a working principle of network RTK. As shown in FIG. 2, the network RTK includes a reference station network, a data processing center, and a data communication link. The reference station network includes a plurality of reference stations. The reference station network collects satellite observation data in real time, and transmits the satellite observation data (or referred to as a satellite observation quantity) to the data processing center through the data communication link. The data processing center determines, based on approximate coordinates of a mobile station (that is, a user), an area in which the mobile station is located, and then sends system error information to the mobile station. The mobile station corrects the satellite observation data based on the received system error information, to obtain accurate satellite observation data. In FIG. 2, the mobile station may be considered as the user.

### 3. Satellite positioning in an urban canyon environment

The urban canyon is an urban environment similar to a natural canyon, and is a man-made canyon with streets dividing surrounding dense building blocks, especially skyscrapers. In the urban canyon environment, satellite signals are blocked due to high and dense buildings, signal quality of observation information received by a terminal (for example, a mobile phone) deteriorates due to a multipath effect, precision of an initial approximate location obtained by the terminal based on observation information of a plurality of satellites is poor, and network RTK has a limited correction effect. When the satellite signals are severely blocked, even fewer than four satellites can be searched by the terminal. As a result, the approximate location of the terminal cannot be determined, directly causing a network RTK failure, a location resolution failure, and a positioning failure.

Because the terminal cannot determine the approximate location of the terminal or cannot accurately determine the approximate location of the terminal in the urban canyon environment based on the satellite signals, high-precision positioning of the terminal in the urban canyon environment cannot be implemented by using an existing network RTK solution. To resolve a problem that the high-precision positioning of the terminal in the urban canyon environment cannot be implemented by using the existing network RTK solution, this application provides a satellite positioning method. In a satellite positioning solution that is provided in this application and that is based on network RTK including an access network device, a UE does not need to provide an approximate location that is of the UE and that is determined by the UE based on a satellite signal, and the solution is applicable to a scenario in which the UE cannot determine the approximate location of the UE or cannot accurately determine the approximate location of the UE based on the satellite signal. In other words, in the scenario in which the UE cannot determine the approximate location of the UE or cannot accurately determine the approximate location of the UE based on the satellite signal, the satellite positioning solution provided in this application can be used to implement high-precision positioning of the UE.

The following first provides, with reference to the accompanying drawings, an example of a satellite positioning system to which the satellite positioning solution provided in this application is applicable.

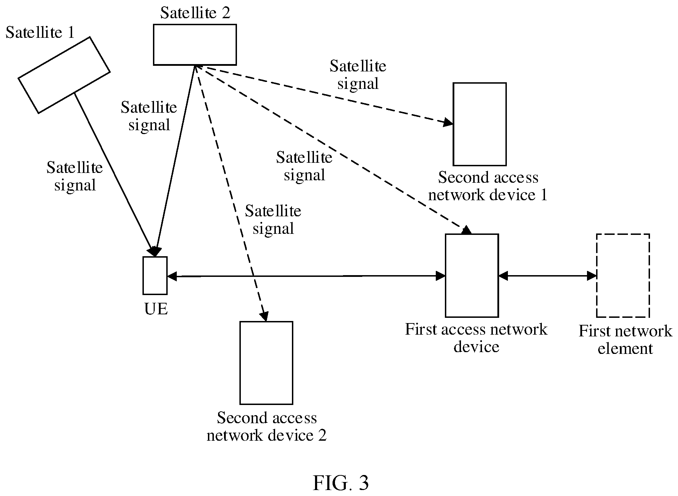

FIG. 3 shows an example of a satellite positioning system according to this application. As shown in FIG. 3, the satellite positioning system includes a plurality of satellites (only two satellites: a satellite 1 and a satellite 2 are shown), a UE, a first access network device (or an access network device that manages a cell currently accessed by the UE) that provides a service for the UE, and a plurality of access network devices (only two access network devices: a second access network device 1 and a second access network device 2 are shown in FIG. 3) adjacent to the first access network device. Optionally, the satellite positioning system further includes a first network element, for example, a location management function (location management function, LMF). The first network element may communicate with the first access network device. It should be understood that the satellite positioning system may include a plurality of UEs, and FIG. 3 shows only one UE as an example. As shown in FIG. 3, the UE may receive a satellite signal, and obtain a satellite observation quantity based on the received satellite signal. The UE may further report the satellite observation quantity of the UE to the first access network device. The first access network device may provide a satellite positioning service for the UE. The first access network device and the plurality of access network devices adjacent to the first access network device each may receive the satellite signal, and obtain a satellite observation quantity based on the received satellite signal. The plurality of access network devices adjacent to the first access network device may send satellite observation quantities to the first access network device. In other words, the first access network device may obtain the satellite observation quantity from the access network device adjacent to the first access network device. The first access network device and the plurality of access network devices adjacent to the first access network device each may support an RTK reference station capability, that is, may be used as a reference station in an RTK network.

The UE is a device that has a wireless transceiver function. The UE may communicate with one or more core network (core network, CN) devices (or referred to as core devices) via an access network device (or referred to as an access device) in a radio access network (radio access network, RAN). The UE may be deployed on land, including an indoor or outdoor device, or a handheld or vehicle-mounted device, may be deployed on a water surface (for example, on a ship), or may be deployed in the air (for example, on an airplane, a balloon, or a satellite). In embodiments of this application, the UE may also be referred to as a terminal device or a terminal, and may be a mobile phone (mobile phone), a mobile station (mobile station, MS), a tablet computer (pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (remote medical), a wireless terminal device in a smart grid (smart grid), a wireless terminal in transportation safety (transportation safety), a wireless terminal device in a smart city (smart city), a wireless terminal in a smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine type communication (machine type communication, MTC) terminal, or the like. The UE may include any type of handheld device, vehicle-mounted device, wearable device, computing device, or another processing device connected to a wireless modem that has a wireless communication function. Optionally, the UE may be the handheld device (handset), the vehicle-mounted device, the wearable device, a terminal in an internet of things or internet of vehicles, a terminal in any form in 5G and an evolved communication system after 5G, or the like that has the wireless communication function. This is not limited in this application.

The access network device may be any device that has a wireless transceiver function and that can communicate with the terminal, for example, a radio access network (radio access network, RAN) node that connects the terminal to a wireless network. Currently, examples of some RAN nodes include a macro base station, a micro base station (also referred to as a small cell), a relay station, an access point, a gNB, a transmission reception point (transmission reception point, TRP), an evolved NodeB (evolved NodeB, eNB), a radio network controller (radio network controller, RNC), a home base station (for example, a home evolved NodeB, or a home NodeB, HNB), a base band unit (base band unit, BBU), a Wi-Fi access point (access point, AP), integrated access and backhaul (integrated access and backhaul, IAB), and the like.

The following describes, with reference to the accompanying drawings, the satellite positioning solution that is provided in embodiments of this application and that is based on the network RTK including the access network device.

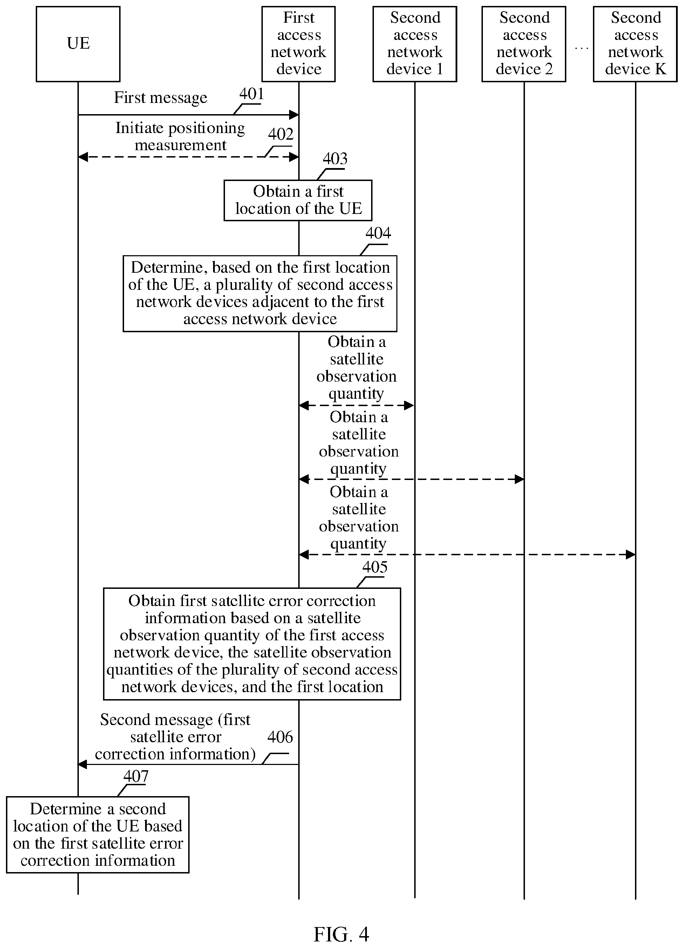

FIG. 4 is an interaction flowchart of a satellite positioning method according to an embodiment of this application. As shown in FIG. 4, the method includes the following steps.

401: A UE sends a first message to a first access network device that provides a service for the UE.

Correspondingly, the first access network device receives the first message from the UE. The first message is used to obtain satellite error correction information of a location of the UE. The first message may be referred to as a satellite error correction information request. The satellite error correction information is used to correct a satellite observation quantity of the UE, that is, a satellite observation quantity obtained by the UE based on a received satellite signal. The first message may be a radio resource control (radio resource control, RRC) message. Optionally, the first message includes an identifier of the UE and a cause value 1, and the cause value 1 indicates that a purpose of sending the first message by the UE is to obtain the satellite error correction information of the location of the UE. Optionally, the first message includes the identifier of the UE and indication information 1, and the indication information 1 indicates that the UE requests the satellite error correction information of the location of the UE.

### 402: The first access network device initiates positioning measurement to the UE.

Correspondingly, the UE responds to the positioning measurement initiated by the first access network device. The positioning measurement initiated by the first access network device is used to determine a first location of the UE, that is, an approximate location of the UE. A possible implementation in which the first access network device initiates the positioning measurement to the UE is as follows: The first access network device initiates 5G single-station positioning measurement to the UE. A possible implementation in which the UE responds to the positioning measurement initiated by the first access network device is as follows: performing the 5G single-station positioning measurement with the first access network device. After initiating the positioning measurement to the UE, the first access network device may perform the positioning measurement with the UE.

An example in which the first access network device initiates the positioning measurement to the UE is as follows: The first access network device initiates round-trip time (round-trip time, RTT) measurement and angle of arrival (angle of arrival, AoA) measurement to the UE. A possible procedure of the RTT measurement is as follows: The first access network device sends a downlink positioning reference signal (positioning reference signal, PRS) to the UE. After receiving the signal, the UE sends a sounding reference signal (sounding reference signal, SRS) to the first access network device. The first access network device may calculate round-trip time between the UE and the first access network device by measuring a time difference between sending the uplink SRS by the UE and receiving the downlink PRS by the UE and a time difference between receiving the uplink SRS by the first access network device and sending the downlink PRS by the first access network device, to determine a distance between the UE and the first access network device. A possible procedure of the AoA measurement is as follows: The UE sends an uplink SRS based on an indication of the first access network device, and the first access network device measures an AoA of the SRS. The first access network device calculates a location of the UE based on the RTT and the AoA that are obtained through the measurement, and uses the location (that is, the first location) obtained through the calculation as the approximate location of the UE.

Step 402 may be considered as a possible manner in which the first access network device determines the approximate location of the UE. The first access network device may alternatively determine the approximate location of the UE in another manner without relying on the satellite signal received by the UE. For example, the first access network device uses a location of the first access network device as the approximate location of the UE. For another example, the first access network device queries an LMF network element for the approximate location of the UE. For still another example, the first access network device determines the probability location of the UE in a multi-station positioning manner. Step 402 is optional rather than mandatory.

### 403: The first access network device obtains the first location of the UE.

The first location of the UE is the approximate location of the UE. A possible implementation of step 403 is as follows: The first access network device performs the 5G single-station positioning measurement with the UE, to obtain a positioning measurement result; and obtains the first location of the UE based on the positioning measurement result. Another possible implementation of step 403 is as follows: The first access network device uses the location of the first access network device as the approximate location of the UE, that is, the first location. Another possible implementation of step 403 is as follows: The first access network device obtains the first location of the UE by querying the LMF network element for the approximate location of the UE.

In a possible implementation, before performing step 402 or step 403, the first access network device determines that the approximate location of the UE needs to be obtained. Optionally, the first access network device determines, based on whether the first message includes location information reported by the UE, whether the approximate location of the UE needs to be obtained. If the first message of the UE already includes the location of the UE, the first access network device does not need to actively obtain the approximate location of the UE. If the first message of the UE does not include the location of the UE, the first access network device needs to actively obtain the approximate location of the UE. It should be understood that, after determining that the approximate location of the UE needs to be obtained, the first access network device performs step 402 and step 403. In the implementation, an operation of actively obtaining the approximate location of the UE may be reduced.

404: The first access network device determines, based on the first location of the UE, a plurality of second access network devices adjacent to the first access network device.

A possible implementation of step 404 is as follows: selecting, based on the first location of the UE, the plurality of second access network devices that meet a first condition from second access network devices adjacent to the first access network device. The first condition includes one or more of the following: a distance from the first access network device is less than a first threshold, a distance from the UE is less than a second threshold, the location of the UE is included in a coverage area, and a topology structure formed with the first access network device covers the UE. Both the first threshold and the second threshold may be configured based on an actual requirement. This is not limited herein. A technical purpose of step 404 may be understood as selecting, based on the first location of the UE, a proper second access network device to form network RTK. It should be understood that another implementation that can achieve a same technical purpose also fall within the protection scope of this application.

Optionally, after the first access network device determines the plurality of second access network devices adjacent to the first access network device, the first access network device and the plurality of second access network devices form a network RTK system. In the network RTK system, the plurality of second access network devices may be used as reference stations to receive the satellite signal, obtain respective satellite observation quantities, and send the satellite observation quantities to the first access network device; and the first access network device is used as a data center to generate a satellite error correction model in a coverage area of the network RTK system based on the satellite observation quantities and locations that are reported by the reference stations. For how the first access network device uses the satellite error correction model, refer to the following.

405: The first access network device obtains first satellite error correction information based on a satellite observation quantity of the first access network device, the satellite observation quantity of the plurality of second access network devices, and the first location.

The first satellite error correction information indicates the satellite error correction information of the location of the UE. The first satellite error correction information may be used to correct the satellite observation quantity of the UE.

Before performing step 405, the first access network device may perform the following operations: receiving the satellite signal, obtaining the satellite observation quantity, that is, the satellite observation quantity of the first access network device, based on the received satellite signal, and obtaining the satellite observation quantity of the plurality of second access network devices (that is, a second access network device 1, a second access network device 2, ..., and a second access network device K in FIG. 4). Optionally, the first access network device obtains the satellite observation quantity of the plurality of second access network devices that meet the first condition. For example, the first access network device sends a satellite observation quantity obtaining request to each of the plurality of second access network devices that meet the first condition. After receiving the satellite observation quantity obtaining request from the first access network device, each second access network device sends a satellite observation quantity of the second access network device to the first access network device. Each second access network device receives the satellite signal, and obtains the satellite observation quantity, that is, the satellite observation quantity of the second access network device, based on the received satellite signal.

A possible implementation of step 405 is as follows: generating the satellite error correction model based on the satellite observation quantity of the first access network device and the satellite observation quantity of the plurality of second access network devices; and obtaining the first satellite error correction information based on the satellite error correction model and the first location. For example, the first access network device generates a satellite error correction model in a coverage area of an access network device based on a satellite observation quantity (pseudoranges, carrier phases, or the like) of the first access network device and the plurality of second access network devices within a period of time, and then uses the approximate location (that is, the first location) of the UE as an input of the satellite error correction model, to calculate the satellite error correction information of the location of the UE, that is, the first satellite error correction information. The satellite error correction information may be referred to as satellite observation quantity error correction information or satellite error correction information. The coverage area of the access network device may be a coverage area of the first access network device and the plurality of second access network devices. That the first access network device generates a satellite error correction model in a coverage area of an access network device based on a satellite observation quantity (pseudoranges, carrier phases, or the like) of the first access network device and the plurality of second access network devices within a period of time may be that the first access network device generates the satellite error correction model in the coverage area of the access network device based on the satellite observation quantity of the first access network device and the plurality of second access network devices and locations of the plurality of second access network devices. In addition, the satellite error correction model may be generated by using a plurality of technologies of existing network RTK. Details are not described herein.

### 406: The first access network device sends a second message to the UE.

Correspondingly, the UE receives the second message from the first access network device. The second message indicates the first satellite error correction information. The first satellite error correction information indicates the satellite error correction information that is of the location of the UE and that is obtained by the first access network device by using the first location. The second message may be an RRC message.

### 407: The UE determines a second location of the UE based on the first satellite error correction information.

Precision of the second location is higher than precision of the first location. The second location may be considered as a high-precision location obtained by correcting the first location (approximate location).

A possible implementation of step 407 is as follows: The UE corrects the satellite observation quantity of the UE based on the first satellite error correction information, and determines the second location by using a corrected satellite observation quantity of the UE. In this implementation, the second location may be accurately determined.

In this embodiment of this application, the first access network device determines the approximate location of the UE without relying on the satellite signal received by the UE, for example, determines the approximate location of the UE in a 5G single-station positioning measurement manner. Therefore, in a scenario in which the UE cannot determine the approximate location of the UE or cannot accurately determine the approximate location of the UE based on the satellite signal, high-precision positioning of the UE can be implemented.

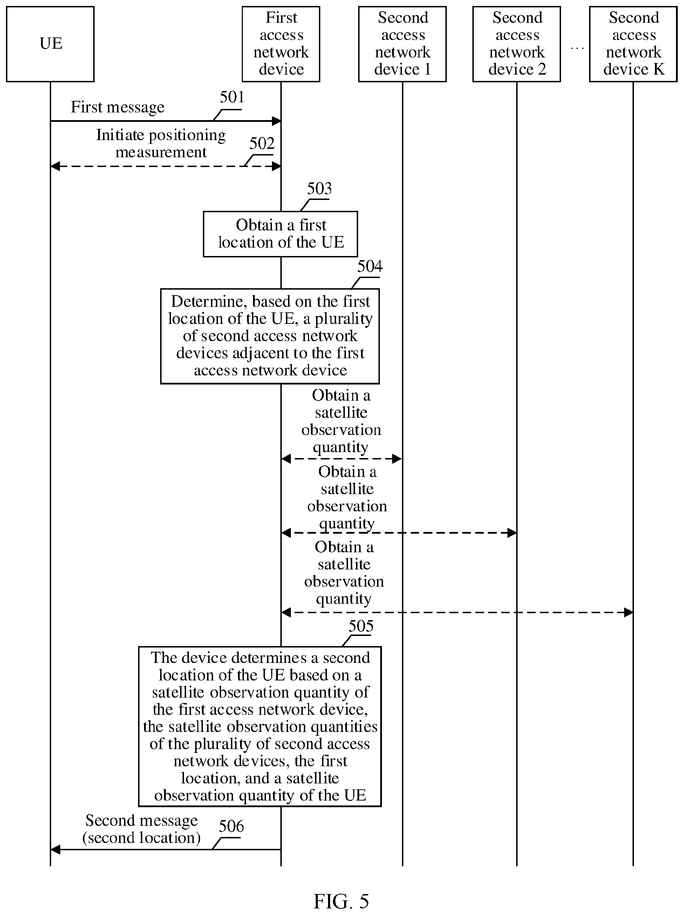

FIG. 5 is an interaction flowchart of another satellite positioning method according to an embodiment of this application. In comparison with the method in FIG. 4, in the method in FIG. 5, a first access network device outputs a corrected location of a UE to the UE, instead of satellite error correction information of the location of the UE. As shown in FIG. 5, the method includes the following steps.

501: The UE sends a first message to the first access network device that provides a service for the UE.

Correspondingly, the first access network device receives the first message from the UE. The first message is used to obtain the location that is of the UE and that is obtained by using a satellite observation quantity of the UE. In other words, the first message is used to request the location of the UE on which satellite positioning is performed. The first message includes the satellite observation quantity of the UE. The satellite observation quantity of the UE is a satellite observation quantity obtained by the UE based on a received satellite signal. The first message may be an RRC message. Optionally, the first message includes an identifier of the UE and a cause value 2, and the cause value 2 indicates that a purpose of sending the first message by the UE is to obtain the location of the UE by using the satellite observation quantity of the UE. Optionally, the first message includes the identifier of the UE and indication information 2, and the indication information 2 indicates that the UE requests to obtain the location of the UE by using the satellite observation quantity of the UE, that is, a location obtained by modifying an approximate location of the UE.

502: The first access network device initiates positioning measurement to the UE.

For step 502, refer to step 402. Step 502 is optional rather than mandatory. Correspondingly, the UE responds to the positioning measurement initiated by the first access network device. The positioning measurement initiated by the first access network device is used to determine a first location of the UE.

503: The first access network device obtains the first location of the UE.

For step 503, refer to step 403.

504: The first access network device determines, based on the first location of the UE, a plurality of second access network devices adjacent to the first access network device.

For step 504, refer to step 404.

505: The first access network device determines a second location of the UE based on a satellite observation quantity of the first access network device, satellite observation quantities of the plurality of second access network devices, the first location, and the satellite observation quantity of the UE.

Precision of the second location is higher than precision of the first location. The second location may be considered as a higher-precision location obtained by correcting the first location.

Before performing step 505, the first access network device may perform the following operations: receiving the satellite signal, obtaining the satellite observation quantity, that is, the satellite observation quantity of the first access network device, based on the received satellite signal, and obtaining the satellite observation quantity of the plurality of second access network devices. Optionally, the first access network device obtains satellite observation quantities of a plurality of second access network devices that meet a first condition.

A possible implementation of step 505 is as follows: generating a satellite error correction model based on the satellite observation quantity of the first access network device and the satellite observation quantity of the plurality of second access network devices; and determining the second location of the UE based on the satellite error correction model, the first location, and the satellite observation quantity of the UE. The satellite error correction model is an expression that is of satellite error correction information at each location in a coverage area of a plurality of access network devices (for example, base stations) and that is established by using satellite observation data of the plurality of access network devices at a plurality of moments. When an approximate location (for example, the first location) is input into the expression of the satellite error correction information, correction information at the location may be obtained. The model is a specific model in the field of satellite positioning, and details are not described herein. In this implementation, because the first location is an accurate approximate location, the second location of the UE may be accurately determined based on the satellite error correction model, the first location, and the satellite observation quantity of the UE.

A possible implementation of determining the second location of the UE based on the satellite error correction model, the first location, and the satellite observation quantity of the UE is as follows: obtaining first satellite error correction information based on the satellite error correction model and the first location, where the first satellite error correction information indicates satellite error correction information of the location of the UE; correcting the satellite observation quantity of the UE based on the first satellite error correction information; and determining the second location of the UE by using a corrected satellite observation quantity of the UE. In this implementation, because the first location is an accurate approximate location, the first satellite error correction information obtained based on the satellite error correction model and the first location is accurate, so that a high-precision second location is obtained.

506: The first access network device sends a second message to the UE.

Correspondingly, the UE receives the second message from the first access network device. The second message indicates the second location. The UE may obtain the second location of the UE based on the second message. The second message may be an RRC message.

In this embodiment of this application, the first access network device determines the approximate location of the UE without relying on the satellite signal received by the UE, for example, determines the approximate location of the UE in a 5G single-station positioning measurement manner. Therefore, in a scenario in which the UE cannot determine the approximate location of the UE or cannot accurately determine the approximate location of the UE based on the satellite signal, high-precision positioning of the UE can be implemented.

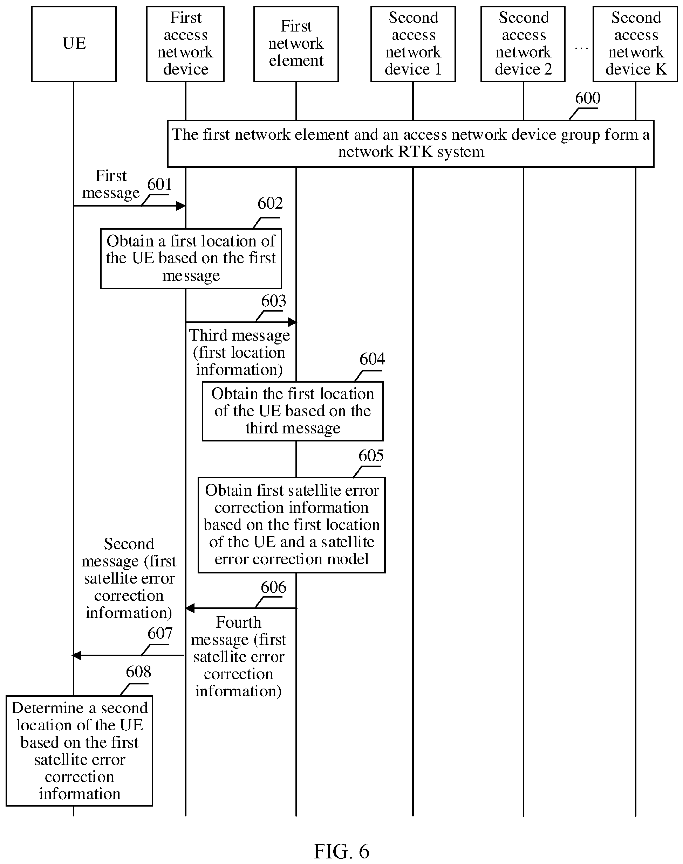

FIG. 6 is an interaction flowchart of another satellite positioning method according to an embodiment of this application. In comparison with the method in FIG. 4, in the method in FIG. 6, a first network element obtains satellite error correction information through calculation and sends the satellite error correction information to a first access network device. As shown in FIG. 6, the method includes the following steps.

600: The first network element and an access network device group form a network RTK system.

That the first network element and an access network device group form a network RTK system may be understood as that the first network element and the access network device group are configured as the network RTK system. The access network device group includes a plurality of access network devices: a second access network device 1, a second access network device 2, ..., and a second access network device K in FIG. 6. K is an integer greater than 2. The first network element may be an LMF network element, or may be another network element having a function similar to that of the LMF network element. In the network RTK system, the plurality of second access network devices and the first access network device may be used as reference stations to receive a satellite signal, and send respectively obtained satellite observation quantities to the first network element; and the first network element is used as a data center to generate a satellite error correction model in a coverage area of the network RTK system based on the satellite observation quantity and locations that are reported by the reference stations. Step 600 is optional rather than mandatory. Step 600 may be understood as a pre-configuration operation, and does not need to be performed each time. In other words, after the first network element and the access network device group form the network RTK system, the network RTK system may be directly used for satellite positioning in a long period of time subsequently, and a network RTK system does not need to be formed for satellite positioning of each UE.

601: The UE sends a first message to the first access network device that provides a service for the UE.

Correspondingly, the first access network device receives the first message from the UE. The first access network device is any access network device in the access network device group. The first message is used to obtain the satellite error correction information of a location of the UE. For step 601, refer to step 401.

602: The first access network device obtains a first location of the UE based on the first message.

That the first access network device obtains a first location of the UE based on the first message may be understood as obtaining the first location of the UE after receiving the first message. In other words, the first access network device determines, based on the first message, that the first location of the UE needs to be obtained. The first message does not need to be used in a process in which the first access network device obtains the first location of the UE. For an implementation in which the first access network device obtains the first location of the UE, refer to step 403.

603: The first access network device sends a third message to the first network element.

Correspondingly, the first network element receives the third message from the first access network device. The third message is used to obtain (or request) the satellite error correction information of the location of the UE. The third message may be referred to as a satellite error correction information request. The third message includes first location information, and the first location information indicates the first location of the UE. The third message may be an NR positioning protocol A (NR positioning protocol A, NRPPa) message. NRPPa is a transmission protocol between a base station and the LMF, and is used to support a positioning function. Optionally, the third message includes an identifier of the UE and a cause value 3, and the cause value 3 indicates that a purpose of sending the third message by the first access network device is to obtain the satellite error correction information of the location of the UE. Optionally, the third message includes the identifier of the UE and indication information 3, and the indication information 3 indicates that the first access network device requests the satellite error correction information of the location of the UE.

In a possible implementation, step 602 is replaced with that the first access network device performs positioning measurement on the UE based on the first message, to obtain positioning measurement information, where the positioning measurement information is used to determine the first location of the UE. In this implementation, the third message includes the positioning measurement information. For example, after receiving the first message, the first access network device performs RTT measurement and AoA measurement on the UE to obtain the positioning measurement information (including RTT and an AoA). The first network element may determine the first location of the UE based on the positioning measurement information.

It should be understood that the first access network device provides location information of the UE for the first network element in two manners: One is to include, in the third message, the first location information indicating the first location of the UE, and the other is to include, in the third message, the positioning measurement information for determining the first location of the UE.

604: The first network element obtains the first location of the UE based on the third message.

605: The first network element obtains first satellite error correction information based on the first location of the UE and a satellite error correction model.

The satellite error correction model may be the satellite error correction model generated by the first network element in step 600. A possible implementation of step 605 is as follows: The first network element uses an approximate location (that is, the first location) of the UE as an input of the satellite error correction model, and calculates the satellite error correction information of the location of the UE, that is, the first satellite error correction information.

606: The first network element sends a fourth message to the first access network device.

The fourth message indicates the first satellite error correction information. The fourth message may be an NRPPa message.

607: The first access network device sends a second message to the UE.

The second message indicates the first satellite error correction information.

608: The UE determines a second location of the UE based on the first satellite error correction information.

For step 608, refer to step 407.

In this embodiment of this application, the first access network device determines the approximate location of the UE without relying on a satellite signal received by the UE, for example, determines the approximate location of the UE in a 5G single-station positioning measurement manner. Therefore, in a scenario in which the UE cannot determine the approximate location of the UE or cannot accurately determine the approximate location of the UE based on the satellite signal, high-precision positioning of the UE can be implemented.

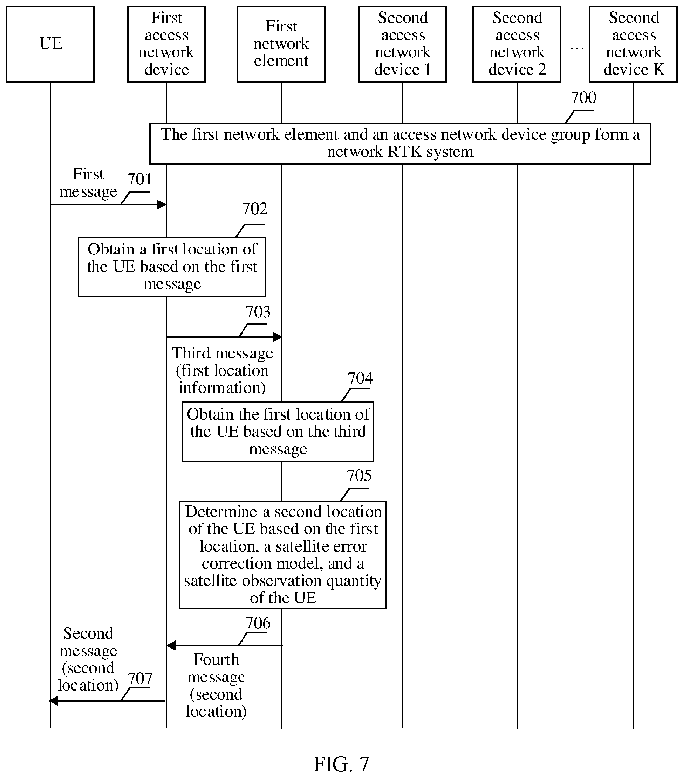

FIG. 7 is an interaction flowchart of another satellite positioning method according to an embodiment of this application. In comparison with the method in FIG. 6, in the method in FIG. 7, a first network element sends a corrected location of a UE to a first access network device, instead of satellite error correction information of the location of the UE. As shown in FIG. 7, the method includes the following steps.

700: The first network element and an access network device group form a network RTK system.

For step 700, refer to step 600. Step 700 is optional.

701: The UE sends a first message to the first access network device that provides a service for the UE.

Correspondingly, the first access network device receives the first message from the UE. For step 701, refer to step 501.

702: The first access network device obtains a first location of the UE based on the first message.

For step 702, refer to step 602.

703: The first access network device sends a third message to the first network element.

Correspondingly, the first network element receives the third message from the first access network device. The third message is used to obtain the location that is of the UE and that is obtained by using a satellite observation quantity of the UE. In other words, the first message is used to request the location of the UE on which satellite positioning is performed. The third message includes first location information and the satellite observation quantity of the UE, and the first location information indicates the first location of the UE. The third message may be an NRPPa message.

In a possible implementation, step 702 is replaced with that the first access network device performs positioning measurement on the UE based on the first message, to obtain positioning measurement information, where the positioning measurement information is used to determine the first location of the UE. In this implementation, the third message includes the positioning measurement information. For example, after receiving the first message, the first access network device performs RTT measurement and AoA measurement on the UE to obtain the positioning measurement information (including RTT and an AoA). The first network element may determine the first location of the UE based on the positioning measurement information.

It should be understood that the first access network device provides location information of the UE for the first network element in two manners: One is to include, in the third message, the first location information indicating the first location of the UE, and the other is to include, in the third message, the positioning measurement information for determining the first location of the UE.

### 704: The first network element obtains the first location based on the third message.

705: The first network element determines a second location of the UE based on the first location, a satellite error correction model, and the satellite observation quantity of the UE.

Precision of the second location is higher than precision of the first location. For step 705, refer to step 505.

706: The first network element sends a fourth message to the first access network device.

The fourth message indicates the second location.

707: The first access network device sends a second message to the UE.

Correspondingly, the UE receives the second message from the first access network device. The second message indicates the second location. The UE may obtain the second location of the UE based on the second message.

In this embodiment of this application, the first access network device determines an approximate location of the UE without relying on a satellite signal received by the UE, and provides the location information of the UE for the first network element. Therefore, in a scenario in which the UE cannot determine the approximate location of the UE or cannot accurately determine the approximate location of the UE based on the satellite signal, high-precision positioning of the UE can be implemented.

The foregoing describes the satellite positioning methods provided in embodiments of this application. The following describes, with reference to the accompanying drawings, structures of communication apparatuses that can implement the satellite positioning methods provided in embodiments of this application.

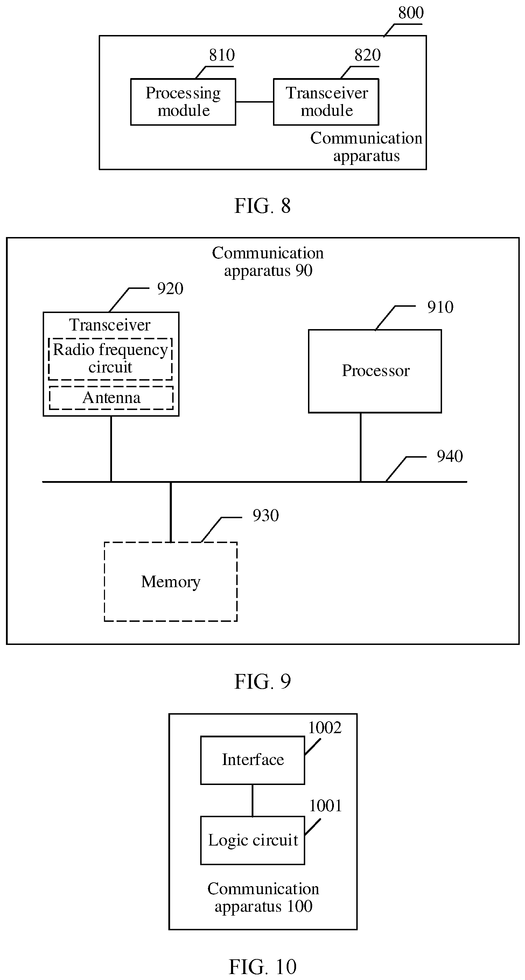

FIG. 8 is a diagram of a structure of a communication apparatus 800 according to an embodiment of this application. The communication apparatus 800 may implement functions or steps implemented by the UE in the foregoing method embodiments, may implement functions or steps implemented by the first access network device in the foregoing method embodiments, or may implement functions or steps implemented by the first network element in the foregoing method embodiments. The communication apparatus may include a processing module 810 and a transceiver module 820. Optionally, a storage unit may be further included. The storage unit may be configured to store instructions (code or a program) and/or data. The processing module 810 and the transceiver module 820 may be coupled to the storage unit. For example, the processing module 810 may read the instructions (the code or the program) and/or the data in the storage unit, to implement a corresponding method. The foregoing units may be disposed independently, or may be partially or completely integrated. For example, the transceiver module 820 may include a sending module and a receiving module. The sending module may be a transmitter, and the receiving module may be a receiver. An entity corresponding to the transceiver module 820 may be a transceiver, or may be a communication interface.

In some possible implementations, the communication apparatus 800 can correspondingly implement the behavior and functions of the UE in the foregoing method embodiments. For example, the communication apparatus 800 may be the UE, or may be a component (for example, a chip or a circuit) used in the UE. For example, the transceiver module 820 may be configured to perform all receiving or sending operations performed by the UE in the embodiments in FIG. 4 to FIG. 7, for example, step 401, step 402, and step 406 in the embodiment shown in FIG. 4, step 501, step 502, and step 506 in the embodiment shown in FIG. 5, step 601 and step 607 in the embodiment shown in FIG. 6, and step 701 and step 707 in the embodiment shown in FIG. 7. The processing module 810 is configured to perform all operations performed by the UE in the embodiments in FIG. 4 to FIG. 7 other than the receiving and sending operations, for example, step 407 in the embodiment shown in FIG. 4 and step 608 in the embodiment shown in FIG. 6.

In some possible implementations, the communication apparatus 800 can correspondingly implement the behavior and functions of the first access network device in the foregoing method embodiments. For example, the communication apparatus 800 may be the first access network device, or may be a component (for example, a chip or a circuit) used in the first access network device. For example, the transceiver module 820 may be configured to perform all receiving or sending operations performed by the first access network device in the embodiments in FIG. 4 to FIG. 7, for example, step 401, step 402, and step 406 in the embodiment shown in FIG. 4, step 501, step 502, and step 502 in the embodiment shown in FIG. 5, step 601, step 603, step 606, and step 607 in the embodiment shown in FIG. 6, and step 701, step 703, step 706, and step 707 in the embodiment shown in FIG. 7; and/or configured to support another process of the technology described in this specification. The processing module 810 is configured to perform all operations performed by the first access network device other than the receiving and sending operations, for example, step 403, step 404, and step 405 in the embodiment shown in FIG. 4, step 503, step 504, and step 505 in the embodiment shown in FIG. 5, step 602 in the embodiment shown in FIG. 6, and step 702 in the embodiment shown in FIG. 7.

In some possible implementations, the communication apparatus 800 can correspondingly implement the behavior and functions of the first network element in the foregoing method embodiments. For example, the communication apparatus 800 may be the first network element, or may be a component (for example, a chip or a circuit) used in the first network element. For example, the transceiver module 820 may be configured to perform all receiving or sending operations performed by the first network element in the embodiment in FIG. 6 or FIG. 7, for example, step 603 and step 606 in the embodiment shown in FIG. 6, or step 703 and step 706 in the embodiment shown in FIG. 7; and/or configured to support another process of the technology described in this specification. The processing module 810 is configured to perform all operations performed by the first network element other than the receiving and sending operations, for example, step 600, step 604, and step 605 in the embodiment shown in FIG. 6, or step 700, step 704, and step 705 in the embodiment shown in FIG. 7.

FIG. 9 is a diagram of a structure of another communication apparatus 90 according to an embodiment of this application. The communication apparatus in FIG. 9 may be the foregoing UE, may be the foregoing first access network device, or may be the foregoing first network element.

As shown in FIG. 9, the communication apparatus 90 includes at least one processor 910 and a transceiver 920.

In some embodiments of this application, the processor 910 and the transceiver 920 may be configured to perform functions, operations, or the like performed by the UE. For example, the transceiver 920 performs all receiving or sending operations performed by the UE in the embodiments in FIG. 4 to FIG. 7. For example, the processor 910 is configured to perform all operations performed by the UE in the embodiments in FIG. 4 to FIG. 7 other than the receiving and sending operations.

In some embodiments of this application, the processor 910 and the transceiver 920 may be configured to perform functions, operations, or the like performed by the first access network device. For example, the transceiver 920 performs all receiving or sending operations performed by the first access network device in the embodiments in FIG. 4 to FIG. 7. For example, the processor 910 is configured to perform all operations performed by the first access network device in the embodiments in FIG. 4 to FIG. 7 other than the receiving and sending operations.

In some embodiments of this application, the processor 910 and the transceiver 920 may be configured to perform functions, operations, or the like performed by the first network element. For example, the transceiver 920 performs all receiving or sending operations performed by the first network element in the embodiments in FIG. 4 to FIG. 7. For example, the processor 910 is configured to perform all operations performed by the first network element in the embodiments in FIG. 4 to FIG. 7 other than the receiving and sending operations.

The transceiver 920 is configured to communicate with another device/apparatus through a transmission medium. The processor 910 receives and sends data and/or signaling by using the transceiver 920, and is configured to implement the methods in the foregoing method embodiments. The processor 910 may implement a function of the processing module 810, and the transceiver 920 may implement a function of the transceiver module 820.

Optionally, the transceiver 920 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. An input/output apparatus, for example, a touchscreen, a display, or a keyboard, is mainly configured to: receive data input by a user and output data to the user.

Optionally, the communication apparatus 90 may further include at least one memory 930, configured to store program instructions and/or data. The memory 930 is coupled to the processor 910. The coupling in this embodiment of this application is indirect coupling or a communication connection between apparatuses, units, or modules in an electrical form, a mechanical form, or another form, and is for information exchange between the apparatuses, the units, or the modules. The processor 910 may operate in collaboration with the memory 930. The processor 910 may execute the program instructions stored in the memory 930. At least one of the at least one memory may be included in the processor.

After the communication apparatus 90 is powered on, the processor 910 may read a software program in the memory 930, interpret and execute instructions of the software program, and process data of the software program. When data needs to be sent wirelessly, the processor 910 performs baseband processing on the to-be-sent data, and then outputs a baseband signal to the radio frequency circuit. The radio frequency circuit performs radio frequency processing on the baseband signal, and then sends, through the antenna, a radio frequency signal in a form of an electromagnetic wave. When data is sent to the communication apparatus, the radio frequency circuit receives a radio frequency signal through the antenna, converts the radio frequency signal into a baseband signal, and outputs the baseband signal to the processor 910. The processor 910 converts the baseband signal into data and processes the data.

**In** another implementation, the radio frequency circuit and the antenna may be disposed independent of the processor that performs baseband processing. For example, in a distributed scenario, the radio frequency circuit and the antenna may be remotely disposed independent of the communication apparatus.

A specific connection medium between the transceiver 920, the processor 910, and the memory 930 is not limited in this embodiment of this application. **In** this embodiment of this application, in FIG. 9, the memory 930, the processor 910, and the transceiver 920 are connected to each other through a bus 940. The bus is represented by using a thick line in FIG. 9. A manner of connection between other components is merely an example for description, and is not limited thereto. The bus may be classified into an address bus, a data bus, a control bus, and the like. For ease of representation, only one thick line is used to represent the bus in FIG. 9, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by a combination of hardware in the processor and a software module.

FIG. 10 is a diagram of a structure of another communication apparatus 100 according to an embodiment of this application. As shown in FIG. 10, the communication apparatus shown in FIG. 10 includes a logic circuit 1001 and an interface 1002. The processing module 810 in FIG. 10 may be implemented by using the logic circuit 1001, and the transceiver module 820 in FIG. 10 may be implemented by using the interface 1002. The logic circuit 1001 may be a chip, a processing circuit, an integrated circuit, a system on chip (system on chip, SoC), or the like. The interface 1002 may be a communication interface, an input/output interface, or the like. In this embodiment of this application, the logic circuit and the interface may be coupled to each other. A specific manner of connection between the logic circuit and the interface is not limited in this embodiment of this application.

In some embodiments of this application, the logic circuit and the interface may be configured to perform functions, operations, or the like performed by the foregoing UE.

In some embodiments of this application, the logic circuit and the interface may be configured to perform functions, operations, or the like performed by the foregoing first access network device.

In some embodiments of this application, the logic circuit and the interface may be configured to perform functions, operations, or the like performed by the foregoing first network element.

This application further provides a computer-readable storage medium. The computer-readable storage medium stores a computer program or instructions. When the computer program or the instructions are run on a computer, the computer is enabled to perform the methods in the foregoing embodiments. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. The computer may be a general-purpose computer, a dedicated computer, a computer network, or another programmable apparatus.

It should be noted that a person of ordinary skill in the art may see that all or some of the steps of the methods in the foregoing embodiments may be implemented by a program instructing relevant hardware. The program may be stored in the computer-readable storage medium. The computer-readable storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (Electrically-Erasable Programmable Read-Only Memory, EEPROM), a compact disc read-only memory (Compact Disc read-only memory, CD-ROM) or another optical disc memory, a magnetic disk memory, a magnetic tape memory, or any other computer-readable medium capable of carrying or storing data.

This application further provides a computer program product. The computer program product includes instructions or a computer program. When the instructions or the computer program is run on a computer, the methods in the foregoing embodiments are performed. The computer program product includes one or more computer instructions. When the computer program instructions are loaded and executed on the computer, the procedures or functions according to embodiments of this application are all or partially generated.

All or some of the foregoing embodiments may be implemented by using software, hardware, firmware, or any combination thereof. When the software is used to implement embodiments, all or some of embodiments may be implemented in a form of a computer program product.

This application further provides a communication system, including the foregoing UE and the foregoing first access network device.

This application further provides another communication system, including the foregoing first access network device and the foregoing first network element. Optionally, the communication system further includes the foregoing UE.

This application further provides a chip. The chip includes a processor and a communication interface. The processor reads, through the communication interface, instructions stored in a memory, to perform the methods in the foregoing embodiments.

The technical solutions of this application essentially, a part that makes contributions to the conventional technology, or all or some of the technical solutions may be implemented in a form of a software product. The computer program product is stored in a storage medium, and includes several instructions for instructing a device (which may be a terminal device, a network device, a vehicle-mounted device, a router, a server, a robot, a chip, a robot, or the like) to perform all or some of the steps of the methods described in embodiments of this application.

## Claims

1. A satellite positioning method, wherein the method is applied to a user equipment UE, and the method comprises:
sending a first message to a first access network device that provides a service for the UE, wherein the first message is used to obtain satellite error correction information of a location of the UE;
responding to positioning measurement initiated by the first access network device, wherein the positioning measurement initiated by the first access network device is used to determine a first location of the UE;
receiving a second message from the first access network device, wherein the second message indicates first satellite error correction information, and the first satellite error correction information indicates the satellite error correction information that is of the location of the UE and that is obtained by the first access network device by using the first location; and
determining a second location of the UE based on the first satellite error correction information, wherein precision of the second location is higher than precision of the first location.

2. A satellite positioning method, wherein the method is applied to a UE, and the method comprises:
sending a first message to a first access network device that provides a service for the UE, wherein the first message is used to obtain a location that is of the UE and that is obtained by using a satellite observation quantity of the UE, and the first message comprises the satellite observation quantity of the UE;
responding to positioning measurement initiated by the first access network device, wherein the positioning measurement initiated by the first access network device is used to determine a first location of the UE; and
receiving a second message from the first access network device, wherein the second message indicates a second location of the UE, precision of the second location is higher than precision of the first location, and the second location is obtained by the first access network device by using the satellite observation quantity of the UE and the first location.

3. The method according to claim 1 or 2, wherein the responding to positioning measurement initiated by the first access network device comprises:
performing 5G single-station positioning measurement with the first access network device, wherein measurement information obtained by performing the 5G single-station positioning measurement with the first access network device is used to determine the first location.

4. A satellite positioning method, wherein the method is applied to a first access network device, and the method comprises:
receiving a first message from a UE, wherein the first message is used to obtain satellite error correction information of a location of the UE;
obtaining a first location of the UE;
determining, based on the first location of the UE, a plurality of second access network devices adjacent to the first access network device;
obtaining first satellite error correction information based on a satellite observation quantity of the first access network device, satellite observation quantities of the plurality of second access network devices, and the first location, wherein the first satellite error correction information indicates the satellite error correction information of the location of the UE; and
sending a second message to the UE, wherein the second message indicates the first satellite error correction information.

5. The method according to claim 4, wherein the obtaining first satellite error correction information based on a satellite observation quantity of the first access network device, satellite observation quantities of the plurality of second access network devices, and the first location comprises:
generating a satellite error correction model based on the satellite observation quantity of the first access network device and the satellite observation quantity of the plurality of second access network devices; and
obtaining the first satellite error correction information based on the satellite error correction model and the first location.

6. A satellite positioning method, wherein the method is applied to a first access network device, and the method comprises:
receiving a first message from a UE, wherein the first message is used to obtain a location that is of the UE and that is obtained by using a satellite observation quantity of the UE, and the first message comprises the satellite observation quantity of the UE;
obtaining a first location of the UE;
determining, based on the first location of the UE, a plurality of second access network devices adjacent to the first access network device;
determining a second location of the UE based on a satellite observation quantity of the first access network device, satellite observation quantities of the plurality of second access network devices, the first location, and the satellite observation quantity of the UE, wherein precision of the second location is higher than precision of the first location; and
sending a second message to the UE, wherein the second message indicates the second location.

7. The method according to claim 6, wherein the determining a second location of the UE based on a satellite observation quantity of the first access network device, satellite observation quantities obtained from the plurality of second access network devices, the first location, and the satellite observation quantity of the UE comprises:
generating a satellite error correction model based on the satellite observation quantity of the first access network device and the satellite observation quantity of the plurality of second access network devices; and
determining the second location of the UE based on the satellite error correction model, the first location, and the satellite observation quantity of the UE.

8. The method according to claim 7, wherein the determining the second location of the UE based on the satellite error correction model, the first location, and the satellite observation quantity of the UE comprises:
obtaining first satellite error correction information based on the satellite error correction model and the first location, wherein the first satellite error correction information indicates satellite error correction information of the location of the UE;
correcting the satellite observation quantity of the UE based on the first satellite error correction information; and
determining the second location by using a corrected satellite observation quantity of the UE.

9. The method according to any one of claims 5 to 8, wherein the determining, based on the first location of the UE, a plurality of second access network devices adjacent to the first access network device comprises:
selecting, based on the first location of the UE, the plurality of second access network devices that meet a first condition from second access network devices adjacent to the first access network device, wherein the first condition comprises one or more of the following: a distance from the first access network device is less than a first threshold, a distance from the UE is less than a second threshold, the location of the UE is comprised in a coverage area, and a topology structure formed with the first access network device covers the UE.

10. The method according to any one of claims 5 to 9, wherein the obtaining a first location of the UE comprises:
performing 5G single-station positioning measurement with the UE, to obtain a positioning measurement result; and
obtaining the first location of the UE based on the positioning measurement result.

11. A satellite positioning method, wherein the method comprises:
receiving, by a first access network device, a first message from a UE, wherein the first message is used to obtain satellite error correction information of a location of the UE;
obtaining, by the first access network device, a first location of the UE based on the first message, and sending a third message to a first network element, wherein the third message is used to obtain the satellite error correction information of the location of the UE, the third message comprises first location information, and the first location information indicates the first location of the UE;
obtaining, by the first network element, the first location based on the third message;
obtaining, by the first network element, first satellite error correction information based on the first location and a satellite error correction model, wherein the first satellite error correction information indicates the satellite error correction information of the location of the UE;
sending, by the first network element, a fourth message to the first access network device, wherein the fourth message indicates the first satellite error correction information; and
sending, by the first access network device, a second message to the UE, wherein the second message indicates the first satellite error correction information.

12. A satellite positioning method, wherein the method comprises:
receiving, by a first access network device, a first message from a UE, wherein the first message is used to obtain satellite error correction information of a location of the UE;
performing, by the first access network device, positioning measurement on the UE based on the first message, to obtain positioning measurement information, wherein the positioning measurement information is used to determine a first location of the UE;
sending, by the first access network device, a third message to a first network element, wherein the third message is used to obtain the satellite error correction information of the location of the UE, and the third message comprises the positioning measurement information;
obtaining, by the first network element, the first location based on the third message;
obtaining, by the first network element, first satellite error correction information based on the first location and a satellite error correction model, wherein the first satellite error correction information indicates the satellite error correction information of the location of the UE;
sending, by the first network element, a fourth message to the first access network device, wherein the fourth message indicates the first satellite error correction information; and
sending, by the first access network device, a second message to the UE, wherein the second message indicates the first satellite error correction information.

13. A satellite positioning method, wherein the method comprises:
receiving, by a first access network device, a first message from a UE, wherein the first message is used to obtain a location that is of the UE and that is obtained by using a satellite observation quantity of the UE, and the first message comprises the satellite observation quantity of the UE;
obtaining, by the first access network device, a first location of the UE based on the first message, and sending a third message to a first network element, wherein the third message is used to obtain the location that is of the UE and that is obtained by using the satellite observation quantity of the UE, the third message comprises first location information and the satellite observation quantity of the UE, and the first location information indicates the first location of the UE;
obtaining, by the first network element, the first location based on the third message;
determining, by the first network element, a second location of the UE based on the first location, a satellite error correction model, and the satellite observation quantity of the UE, wherein precision of the second location is higher than precision of the first location;
sending, by the first network element, a fourth message to the first access network device, wherein the fourth message indicates the second location; and
sending, by the first access network device, a second message to the UE, wherein the second message indicates the second location.

14. A satellite positioning method, wherein the method comprises:
receiving, by a first access network device, a first message from a UE, wherein the first message is used to obtain a location that is of the UE and that is obtained by using a satellite observation quantity of the UE, and the first message comprises the satellite observation quantity of the UE;
performing, by the first access network device, positioning measurement on the UE based on the first message, to obtain positioning measurement information, wherein the positioning measurement information is used to determine a first location of the UE;
sending, by the first access network device, a third message to a first network element, wherein the third message is used to obtain the location that is of the UE and that is obtained by using the satellite observation quantity of the UE, and the third message comprises the positioning measurement information and the satellite observation quantity of the UE;
obtaining, by the first network element, the first location and the satellite observation quantity of the UE based on the third message;
determining, by the first network element, a second location of the UE based on the first location, a satellite error correction model, and the satellite observation quantity of the UE, wherein precision of the second location is higher than precision of the first location;
sending, by the first network element, a fourth message to the first access network device, wherein the fourth message indicates the second location; and
sending, by the first access network device, a second message to the UE, wherein the second message indicates the second location.

15. The method according to claim 13 or 14, wherein the determining, by the first network element, a second location of the UE based on the first location, a satellite error correction model, and the satellite observation quantity of the UE comprises:
obtaining, by the first network element, first satellite error correction information based on the satellite error correction model and the first location, wherein the first satellite error correction information indicates satellite error correction information of the location of the UE;
correcting, by the first network element, the satellite observation quantity of the UE based on the first satellite error correction information; and
determining, by the first network element, the second location by using a corrected satellite observation quantity of the UE.

16. The method according to claim 11 or 13, wherein the obtaining, by the first access network device, a first location of the UE based on the first message comprises:
performing, by the first access network device, 5G single-station positioning measurement with the UE, to obtain a positioning measurement result; and
obtaining, by the first access network device, the first location of the UE based on the positioning measurement result.

17. A communication apparatus, wherein the communication apparatus is comprised in a UE, and the communication apparatus comprises:
a transceiver module, configured to send a first message to a first access network device that provides a service for the UE, wherein the first message is used to obtain satellite error correction information of a location of the UE; and
a processing module, configured to respond to positioning measurement initiated by the first access network device, wherein the positioning measurement initiated by the first access network device is used to determine a first location of the UE, wherein
the transceiver module is further configured to receive a second message from the first access network device, wherein the second message indicates first satellite error correction information, and the first satellite error correction information indicates the satellite error correction information that is of the location of the UE and that is obtained by the first access network device by using the first location; and
the processing module is further configured to determine a second location of the UE based on the first satellite error correction information, wherein precision of the second location is higher than precision of the first location.

18. A communication apparatus, wherein the communication apparatus is comprised in a UE, and the communication apparatus comprises:
a transceiver module, configured to send a first message to a first access network device that provides a service for the UE, wherein the first message is used to obtain a location that is of the UE and that is obtained by using a satellite observation quantity of the UE, and the first message comprises the satellite observation quantity of the UE; and
a processing module, configured to respond to positioning measurement initiated by the first access network device, wherein the positioning measurement initiated by the first access network device is used to determine a first location of the UE, wherein
the transceiver module is further configured to receive a second message from the first access network device, wherein the second message indicates a second location of the UE, precision of the second location is higher than precision of the first location, and the second location is obtained by the first access network device by using the satellite observation quantity of the UE and the first location.

19. The communication apparatus according to claim 17 or 18, wherein
the processing module is specifically configured to perform 5G single-station positioning measurement with the first access network device, wherein measurement information obtained by performing the 5G single-station positioning measurement with the first access network device is used to determine the first location.

20. A communication apparatus, wherein the communication apparatus is comprised in a first access network device, and the communication apparatus comprises:
a transceiver module, configured to receive a first message from a UE, wherein the first message is used to obtain satellite error correction information of a location of the UE; and
a processing module, configured to: obtain a first location of the UE; determine, based on the first location of the UE, a plurality of second access network devices adjacent to the first access network device; and obtain first satellite error correction information based on a satellite observation quantity of the first access network device, satellite observation quantities of the plurality of second access network devices, and the first location, wherein the first satellite error correction information indicates the satellite error correction information of the location of the UE, wherein
the transceiver module is further configured to send a second message to the UE, wherein the second message indicates the first satellite error correction information.

21. The communication apparatus according to claim 20, wherein
the processing module is specifically configured to: generate a satellite error correction model based on the satellite observation quantity of the first access network device and the satellite observation quantity of the plurality of second access network devices; and obtain the first satellite error correction information based on the satellite error correction model and the first location.

22. A communication apparatus, wherein the communication apparatus is comprised in a first access network device, and the communication apparatus comprises:
a transceiver module, configured to receive a first message from a UE, wherein the first message is used to obtain a location that is of the UE and that is obtained by using a satellite observation quantity of the UE, and the first message comprises the satellite observation quantity of the UE; and
a processing module, configured to: obtain a first location of the UE; determine, based on the first location of the UE, a plurality of second access network devices adjacent to the first access network device; and determine a second location of the UE based on a satellite observation quantity of the first access network device, satellite observation quantities of the plurality of second access network devices, the first location, and the satellite observation quantity of the UE, wherein precision of the second location is higher than precision of the first location, wherein
the transceiver module is further configured to send a second message to the UE, wherein the second message indicates the second location.

23. The communication apparatus according to claim 22, wherein
the processing module is specifically configured to: generate a satellite error correction model based on the satellite observation quantity of the first access network device and the satellite observation quantity of the plurality of second access network devices; and
determine the second location of the UE based on the satellite error correction model, the first location, and the satellite observation quantity of the UE.

24. The communication apparatus according to claim 23, wherein
the processing module is specifically configured to: obtain first satellite error correction information based on the satellite error correction model and the first location, wherein the first satellite error correction information indicates satellite error correction information of the location of the UE; correct the satellite observation quantity of the UE based on the first satellite error correction information; and determine the second location by using a corrected satellite observation quantity of the UE.

25. The communication apparatus according to any one of claims 21 to 24, wherein
the processing module is specifically configured to select, based on the first location of the UE, the plurality of second access network devices that meet a first condition from second access network devices adjacent to the first access network device, wherein the first condition comprises one or more of the following: a distance from the first access network device is less than a first threshold, a distance from the UE is less than a second threshold, the location of the UE is comprised in a coverage area, and a topology structure formed with the first access network device covers the UE.

26. The communication apparatus according to any one of claims 21 to 25, wherein
the processing module is specifically configured to: perform 5G single-station positioning measurement with the UE, to obtain a positioning measurement result; and obtain the first location of the UE based on the positioning measurement result.

27. A computer-readable storage medium, wherein the computer-readable storage medium stores a computer program; the computer program comprises program instructions; and when the program instructions are executed, a computer is enabled to perform the method according to any one of claims 1 to 5; or when the program instructions are executed, a computer is enabled to perform the method according to any one of claims 6 to 10.

28. A communication apparatus, comprising a processor, wherein the processor the processor is configured to: when executing instructions, enable the communication apparatus to perform the method according to any one of claims 1 to 5, or enable the communication apparatus to perform the method according to any one of claims 6 to 10.

29. A chip, wherein the chip comprises a processor and a communication interface, and the processor reads, through the communication interface, instructions stored in a memory, to perform the method according to any one of claims 1 to 5, or perform the method according to any one of claims 6 to 10.

30. A communication system, comprising the first access network device and the first network element according to any one of claims 11 to 17.
